# EUROPEAN PATENT APPLICATION

(11) **EP 4 801 138 A1**
(43) Date of publication of application: **02.09.2026**
(21) Application number: 23956883.5
(22) Date of filing: 25.10.2023
(51) Int. Cl.: H04W 72/04, H04L 5/00, H04W 72/23, H04W 72/21

(54) **APPARATUS AND METHOD FOR TRANSMITTING AND RECEIVING SIGNAL OF TERMINAL AND BASE STATION IN WIRELESS COMMUNICATION SYSTEM**

(71) Applicant: LG Electronics Inc., Yeongdeungpo-gu Seoul 07336 (KR)
(72) Inventor: PARK, Yeji, Seoul 06772 (KR); KIM, Woochan, Seoul 06772 (KR)
(74) Representative: Frenkel, Matthias Alexander
(86) International application number: PCT/KR2023/016619
(87) International publication number: WO 2025/089448

(57) **Abstract**

The present disclosure relates to a method for operating a terminal in a wireless communication system. The method may include the steps of: performing a radio resource control (RRC) connection configuration procedure with a base station; receiving a signal including a reference signal and data from the base station; determining channel information on the basis of the reference signal; transmitting the channel information to the base station; and receiving, from the base station, slot-related configuration information determined on the basis of the channel information, wherein the slot-related configuration information includes information on a slot group determined on the basis of a channel variation, and the period and position of the reference signal is configured for each slot group determined on the basis of the information on the slot group.

## Description

### TECHNICAL FIELD

The following description relates to a wireless communication system, and relates to a method and apparatus for transmitting and receiving signals between a terminal and a base station in a wireless communication system.

In particular, a method and an apparatus for a UE and a base station to transmit and receive based on a reference signal allocated based on a slot group may be provided.

### BACKGROUND ART

Radio access systems have come into widespread in order to provide various types of communication services such as voice or data. In general, a radio access system is a multiple access system capable of supporting communication with multiple users by sharing available system resources (bandwidth, transmit power, etc.). Examples of the multiple access system include a code division multiple access (CDMA) system, a frequency division multiple access (FDMA) system, a time division multiple access (TDMA) system, a single carrier-frequency division multiple access (SC-FDMA) system, etc.

In particular, as many communication apparatuses require a large communication capacity, an enhanced mobile broadband (eMBB) communication technology has been proposed compared to radio access technology (RAT). In addition, not only massive machine type communications (MTC) for providing various services anytime anywhere by connecting a plurality of apparatuses and things but also communication systems considering services/user equipments (UEs) sensitive to reliability and latency have been proposed. To this end, various technical configurations have been proposed.

### DISCLOSURE

### TECHNICAL PROBLEM

The disclosure may provide an apparatus and a method for a UE and a base station to transmit and receive a signal in a wireless communication system.

The disclosure may provide an apparatus and a method for grouping slots in a wireless communication system.

The disclosure may provide an apparatus and a method for allocating a reference signal based on a slot group in a wireless communication system.

The disclosure may provide an apparatus and a method for changing a size of a slot group based on a channel variation amount in a wireless communication system.

The disclosure may provide an apparatus and a method in which a size of a slot group is initialized based on a block error rate (BLER) in a wireless communication system.

The present disclosure relates to an apparatus and a method for transmitting a plurality of transport blocks (TBs) as one unit in a wireless communication system.

The technical objectives of the present disclosure are not limited to the aforementioned aspects, and other technical objectives not explicitly mentioned may be recognized by those skilled in the relevant art from the embodiments of the present disclosure described below.

### TECHNICAL SOLUTION

In an example of the present disclosure, a method of operating a user equipment (UE) in a wireless communication system may comprise: performing a radio resource control (RRC) connection establishment procedure with a base station; receiving, from the base station, a signal including a reference signal and data; determining channel information based on the reference signal; transmitting, to the base station, the channel information; and receiving, from the base station, slot-related configuration information determined based on the channel information, wherein the slot-related configuration information may include information related to a slot group determined based on a channel variation amount, and wherein a periodicity and a position of the reference signal may be configured for respective ones of the slot group determined based on the information related to the slot group.

In an example of the present disclosure, a method of operating a base station in a wireless communication system may comprise: performing a radio resource control (RRC) connection establishment procedure with a user equipment (UE); transmitting, to the UE, a signal including a reference signal and data; receiving, from the UE, channel information; and transmitting, to the UE, slot-related configuration information determined based on the channel information, wherein the slot-related configuration information may include information related to a slot group determined based on a channel variation amount, and wherein a periodicity and a position of the reference signal may be configured for respective ones of the slot group determined based on the information related to the slot group.

In an example of the present disclosure, a UE in a wireless communication system comprises: a transceiver; and a processor connected to the transceiver, wherein the processor may be configured to: perform a radio resource control (RRC) connection establishment procedure with a base station; receive, from the base station, a signal including a reference signal and data; determine channel information based on the reference signal; transmit, to the base station, the channel information; and receive, from the base station, slot-related configuration information determined based on the channel information, wherein the slot-related configuration information may include information related to a slot group determined based on a channel variation amount, and wherein a periodicity and a position of the reference signal may be configured for respective ones of the slot group determined based on the information related to the slot group.

In an example of the present disclosure, a base station in a wireless communication system comprises: a transceiver; and a processor connected to the transceiver, wherein the processor may be configured to: perform a radio resource control (RRC) connection establishment procedure with a user equipment (UE); transmit, to the UE, a signal including a reference signal and data; receive, from the UE channel information; and transmit, to the UE, slot-related configuration information determined based on the channel information, wherein the slot-related configuration information may include information related to a slot group determined based on a channel variation amount, and wherein a periodicity and a position of the reference signal may be configured for respective ones of the slot group determined based on the information related to the slot group.

In an example of the present disclosure, a communication device comprises: at least one processor; and at least one computer memory connected to the at least one processor and storing instructions that, based on executed by the at least one processor, cause the communication device to perform operations comprising: performing a radio resource control (RRC) connection establishment procedure with a base station; receiving, from the base station, a signal including a reference signal and data; determining channel information based on the reference signal; transmitting, to the base station, the channel information; and receiving, from the base station, slot-related configuration information determined based on the channel information, wherein the slot-related configuration information may include information related to a slot group determined based on a channel variation amount, and a periodicity and a position of the reference signal may be configured for respective ones of the slot group determined based on the information related to the slot group.

In an example of the present disclosure, a non-transitory computer-readable medium storing at least one instruction comprises: the at least one instruction executable by a processor, wherein the at least one instruction causes a device to perform operations comprising: performing a radio resource control (RRC) connection establishment procedure with a base station; receiving, from the base station, a signal including a reference signal and data; determining channel information based on the reference signal; transmitting, to the base station, the channel information; and receiving, from the base station, slot-related configuration information determined based on the channel information, wherein the slot-related configuration information may include information related to a slot group determined based on a channel variation amount, and wherein a periodicity and a position of the reference signal may be configured for respective ones of the slot group determined based on the information related to the slot group.

The above-described aspects of the present disclosure are merely some of the preferred embodiments of the present disclosure, and various embodiments reflecting the technical features of the present disclosure may be derived and understood by those of ordinary skill in the art based on the following detailed description of the disclosure.

### ADVANTAGEOUS EFFECTS

As is apparent from the above description, the embodiments of the present disclosure have the following effects.

According to the disclosure, a UE and a base station may transmit and receive a reference signal allocated based on a slot group.

According to the disclosure, a size of a slot group may be changed according to a change in a wireless environment.

According to the disclosure, a period of a reference signal may be changed according to a change in a wireless environment.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### BRIEF DESCRIPTION OF THE DRAWINGS

The accompanying drawings are provided to help understanding of the present disclosure, and may provide embodiments of the present disclosure together with a detailed description. However, the technical features of the present disclosure are not limited to specific drawings, and the features disclosed in each drawing may be combined with each other to constitute a new embodiment. Reference numerals in each drawing may refer to structural elements.
FIG. 1 shows an example of a communication system applicable to the present disclosure.
FIG. 2 shows an example of a wireless device applicable to the present disclosure.
FIG. 3 shows another example of a wireless device applicable to the present disclosure.
FIG. 4 shows an example of a hand-held device applicable to the present disclosure.
FIG. 5 shows an example of a car or an autonomous driving car applicable to the present disclosure.
FIG. 6 shows an example of artificial intelligence (AI) device applicable to the present disclosure.
FIG. 7 shows a method of processing a transmitted signal applicable to the present disclosure.
FIG. 8 shows an example of a communication structure providable in a 6th generation (6G) system applicable to the present disclosure.
FIG. 9 shows an electromagnetic spectrum applicable to the present disclosure.
FIG. 10 shows a THz communication method applicable to the present disclosure.
FIG. 11 shows a THz wireless communication transceiver applicable to the present disclosure.
FIG. 12 shows an example of a 210 GHz one-stage common source amplifier circuit configuration using a Metamorphic high electron mobility transistor (HEMT) technology having a gate length of 50 nm.
FIG. 13 shows an example of an active mixer MMIC circuit configuration of a dual gate structure using a 100 nm mHEMT technology.
FIG. 14 shows a THz signal generation method applicable to the present disclosure.
FIG. 15 shows a wireless communication transceiver applicable to the present disclosure.
FIG. 16 shows a transmitter structure applicable to the present disclosure.
FIG. 17 shows a modulator structure applicable to the present disclosure.
FIG. 18 shows an example of a frame structure of THz communication according to an embodiment of the present disclosure.
FIG. 19 shows a position of DMRS allocated in a case of using a large SCS in a THz communication system.
FIG. 20 shows an example of a procedure of performing channel estimation through a DMRS in a wireless communication system according to an embodiment of the present disclosure.
FIG. 21 shows examples of a method and a procedure for setting a slot group size according to a channel variation amount according to an embodiment of the present disclosure.
FIG. 22 shows examples of a method and a procedure for setting a slot group size according to a channel variation amount according to an embodiment of the present disclosure.
FIG. 23 shows an example of a method for determining a slot group size based on a block error rate (BLER) according to an embodiment of the present disclosure.
FIG. 24 shows an example of a procedure in which the base station calculates a channel variation amount and changes a slot group configuration according to an embodiment of the present disclosure.
FIG. 25 shows an example of a procedure in which a base station changes a slot group configuration based on an amount of channel variation amount directly calculated by a UE according to an embodiment of the present disclosure.
FIG. 26 shows an example of a procedure in which a base station changes a slot group configuration based on slot group size information directly determined by a UE according to an embodiment of the present disclosure.
FIG. 27 shows a first embodiment of a slot group determined through signaling between a UE and a base station according to an embodiment of the present disclosure.
FIG. 28 shows a second embodiment of a slot group determined through signaling between a UE and a base station according to an embodiment of the present disclosure.
FIG. 29 shows a third embodiment of a slot group determined through signaling between a UE and a base station according to an embodiment of the present disclosure.
FIG. 30 shows an example of a procedure in which a UE transmits and receives data based on a slot group configuration according to an embodiment of the present disclosure.
FIG. 31 shows an example of a procedure in which a base station transmits and receives data based on a slot group configuration according to an embodiment of the present disclosure.

### MODE FOR INVENTION

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. In this case, the term "BS" may be replaced with a fixed station, a Node B, an eNB (eNode B), a gNB (gNode B), an ng-eNB, an advanced base station (ABS), an access point, etc.

In addition, in the embodiments of the present disclosure, the term terminal may be replaced with a user equipment (UE), a mobile station (MS), a subscriber station (SS), a mobile subscriber station (MSS), a mobile terminal, an advanced mobile station (AMS), etc.

In addition, a transmitter is a fixed and/or mobile node that provides a data service or a call service and a receiver is a fixed and/or mobile node that receives a data service or a call service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 38.211, 3GPP TS 38.212, 3GPP TS 38.213, 3GPP TS 38.321 and 3GPP TS 38.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" may refer to a detailed number of a standard document. LTE/NR/6G may be collectively referred to as a 3GPP system.

For background arts, terms, abbreviations, etc. used in the present disclosure, refer to matters described in the standard documents published prior to the present disclosure. For example, reference may be made to the standard documents 36.xxx and 38.XXX.

### Communication System Applicable to the Present Disclosure

Without being limited thereto, various descriptions, functions, procedures, proposals, methods and/or operational flowcharts of the present disclosure disclosed herein are applicable to various fields requiring wireless communication/connection (e.g., 5G).

Hereinafter, a more detailed description will be given with reference to the drawings. In the following drawings/description, the same reference numerals may exemplify the same or corresponding hardware blocks, software blocks or functional blocks unless indicated otherwise.

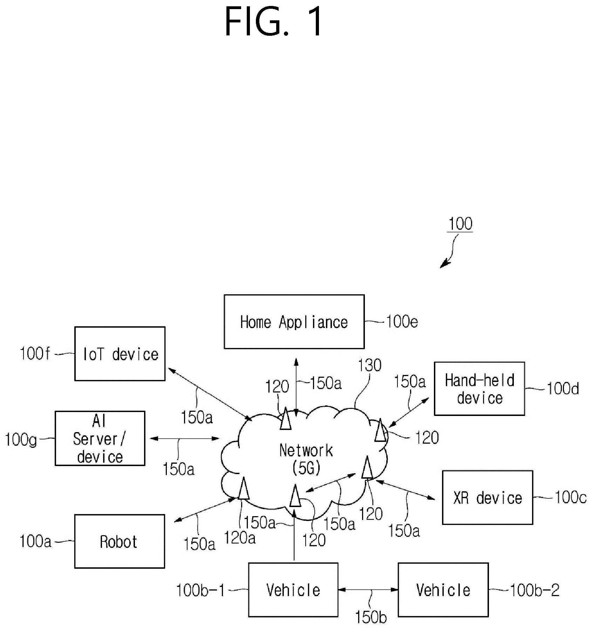

FIG. 1 shows an example of a communication system applicable to the present disclosure.

Referring to FIG. 1, the communication system 100 applicable to the present disclosure includes a wireless device, a base station and a network. The wireless device refers to a device for performing communication using radio access technology (e.g., 5G NR or LTE) and may be referred to as a communication/wireless/5G device. Without being limited thereto, the wireless device may include a robot 100 a, vehicles 100 b-1 and 100 b-2, an extended reality (XR) device 100 c, a hand-held device 100 d, a home appliance 100 e, an Internet of Thing (IoT) device 100 f, and an artificial intelligence (AI) device/server 100 g. For example, the vehicles may include a vehicle having a wireless communication function, an autonomous vehicle, a vehicle capable of performing vehicle-to-vehicle communication, etc. The vehicles 100 b-1 and 100 b-2 may include an unmanned aerial vehicle (UAV) (e.g., a drone). The XR device 100 c includes an augmented reality (AR)/virtual reality (VR)/mixed reality (MR) device and may be implemented in the form of a head-mounted device (HMD), a head-up display (HUD) provided in a vehicle, a television, a smartphone, a computer, a wearable device, a home appliance, a digital signage, a vehicle or a robot. The hand-held device 100 d may include a smartphone, a smart pad, a wearable device (e.g., a smart watch or smart glasses), a computer (e.g., a laptop), etc. The home appliance 100 e may include a TV, a refrigerator, a washing machine, etc. The IoT device 100 f may include a sensor, a smart meter, etc. For example, the base station 120 and the network 130 may be implemented by a wireless device, and a specific wireless device 120 a may operate as a base station/network node for another wireless device.

The wireless devices 100 a to 100 f may be connected to the network 130 through the base station 120. AI technology is applicable to the wireless devices 100 a to 100 f, and the wireless devices 100 a to 100 f may be connected to the AI server 100 g through the network 130. The network 130 may be configured using a 3G network, a 4G (e.g., LTE) network or a 5G (e.g., NR) network, etc. The wireless devices 100 a to 100 f may communicate with each other through the base station 120/the network 130 or perform direct communication (e.g., sidelink communication) without through the base station 120/the network 130. For example, the vehicles 100 b-1 and 100 b-2 may perform direct communication (e.g., vehicle to vehicle (V2V)/vehicle to everything (V2X) communication). In addition, the IoT device 100 f (e.g., a sensor) may perform direct communication with another IoT device (e.g., a sensor) or the other wireless devices 100 a to 100 f.

Wireless communications/ connections 150 a, 150 b and 150 c may be established between the wireless devices 100 a to 100 f/the base station 120 and the base station 120/the base station 120. Here, wireless communication/connection may be established through various radio access technologies (e.g., 5G NR) such as uplink/downlink communication 150 a, sidelink communication 150 b (or D2D communication) or communication 150 c between base stations (e.g., relay, integrated access backhaul (IAB). The wireless device and the base station/wireless device or the base station and the base station may transmit/receive radio signals to/from each other through wireless communication/ connection 150 a, 150 b and 150 c. For example, wireless communication/ connection 150 a, 150 b and 150 c may enable signal transmission/reception through various physical channels. To this end, based on the various proposals of the present disclosure, at least some of various configuration information setting processes for transmission/reception of radio signals, various signal processing procedures (e.g., channel encoding/decoding, modulation/demodulation, resource mapping/demapping, etc.), resource allocation processes, etc. may be performed.

### Communication System Applicable to the Present Disclosure

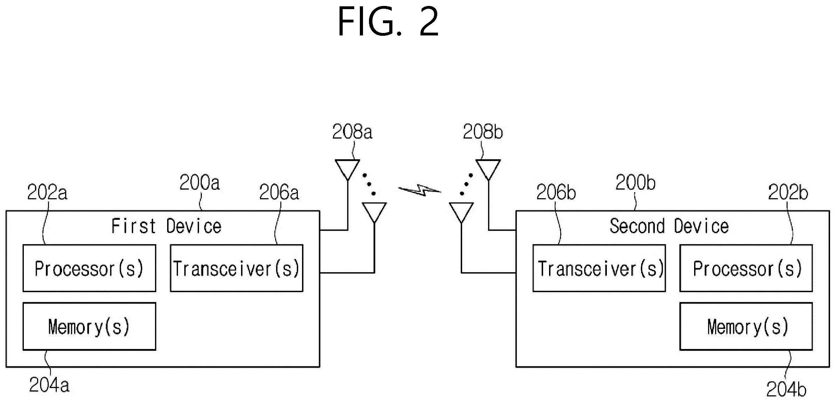

FIG. 2 shows an example of a wireless device applicable to the present disclosure.

Referring to FIG. 2, a first wireless device 200 a and a second wireless device 200 b may transmit and receive radio signals through various radio access technologies (e.g., LTE or NR). Here, (the first wireless device 200 a, the second wireless device 200 b) may correspond to (the wireless device 100 x, the base station 120) and/or (the wireless device 100 x, the wireless device 100 x) of FIG. 1.

The first wireless device 200 a may include one or more processors 202 a and one or more memories 204 a and may further include one or more transceivers 206 a and/or one or more antennas 208 a. The processor 202 a may be configured to control the memory 204 a and/or the transceiver 206 a and to implement descriptions, functions, procedures, proposals, methods and/or operational flowcharts disclosed herein. For example, the processor 202 a may process information in the memory 204 a to generate first information/signal and then transmit a radio signal including the first information/signal through the transceiver 206 a. In addition, the processor 202 a may receive a radio signal including second information/signal through the transceiver 206 a and then store information obtained from signal processing of the second information/signal in the memory 204 a. The memory 204 a may be coupled with the processor 202 a, and store a variety of information related to operation of the processor 202 a. For example, the memory 204 a may store software code including instructions for performing all or some of the processes controlled by the processor 202 a or performing the descriptions, functions, procedures, proposals, methods and/or operational flowcharts disclosed herein. Here, the processor 202 a and the memory 204 a may be part of a communication modem/circuit/chip designed to implement wireless communication technology (e.g., LTE or NR). The transceiver 206 a may be coupled with the processor 202 a to transmit and/or receive radio signals through one or more antennas 208 a. The transceiver 206 a may include a transmitter and/or a receiver. The transceiver 206 a may be used interchangeably with a radio frequency (RF) unit. In the present disclosure, the wireless device may refer to a communication modem/circuit/chip.

The second wireless device 200 b may include one or more processors 202 b and one or more memories 204 b and may further include one or more transceivers 206 b and/or one or more antennas 208 b. The processor 202 b may be configured to control the memory 204 b and/or the transceiver 206 b and to implement the descriptions, functions, procedures, proposals, methods and/or operational flowcharts disclosed herein. For example, the processor 202 b may process information in the memory 204 b to generate third information/signal and then transmit the third information/signal through the transceiver 206 b. In addition, the processor 202 b may receive a radio signal including fourth information/signal through the transceiver 206 b and then store information obtained from signal processing of the fourth information/signal in the memory 204 b. The memory 204 b may be coupled with the processor 202 b to store a variety of information related to operation of the processor 202 b. For example, the memory 204 b may store software code including instructions for performing all or some of the processes controlled by the processor 202 b or performing the descriptions, functions, procedures, proposals, methods and/or operational flowcharts disclosed herein. Herein, the processor 202 b and the memory 204 b may be part of a communication modem/circuit/chip designed to implement wireless communication technology (e.g., LTE or NR). The transceiver 206 b may be coupled with the processor 202 b to transmit and/or receive radio signals through one or more antennas 208 b. The transceiver 206 b may include a transmitter and/or a receiver. The transceiver 206 b may be used interchangeably with a radio frequency (RF) unit. In the present disclosure, the wireless device may refer to a communication modem/circuit/chip.

Hereinafter, hardware elements of the wireless devices 200 a and 200 b will be described in greater detail. Without being limited thereto, one or more protocol layers may be implemented by one or more processors 202 a and 202 b. For example, one or more processors 202 a and 202 b may implement one or more layers (e.g., functional layers such as physical (PHY), media access control (MAC), radio link control (RLC), packet data convergence protocol (PDCP), radio resource control (RRC), service data adaptation protocol (SDAP)). One or more processors 202 a and 202 b may generate one or more protocol data units (PDUs) and/or one or more service data unit (SDU) according to the descriptions, functions, procedures, proposals, methods and/or operational flowcharts disclosed herein. One or more processors 202 a and 202 b may generate messages, control information, data or information according to the descriptions, functions, procedures, proposals, methods and/or operational flowcharts disclosed herein. One or more processors 202 a and 202 b may generate PDUs, SDUs, messages, control information, data or information according to the functions, procedures, proposals and/or methods disclosed herein and provide the PDUs, SDUs, messages, control information, data or information to one or more transceivers 206 a and 206 b. One or more processors 202 a and 202 b may receive signals (e.g., baseband signals) from one or more transceivers 206 a and 206 b and acquire PDUs, SDUs, messages, control information, data or information according to the descriptions, functions, procedures, proposals, methods and/or operational flowcharts disclosed herein.

One or more processors 202 a and 202 b may be referred to as controllers, microcontrollers, microprocessors or microcomputers. One or more processors 202 a and 202 b may be implemented by hardware, firmware, software or a combination thereof. For example, one or more application specific integrated circuits (ASICs), one or more digital signal processors (DSPs), one or more digital signal processing devices (DSPDs), programmable logic devices (PLDs) or one or more field programmable gate arrays (FPGAs) may be included in one or more processors 202 a and 202 b. The descriptions, functions, procedures, proposals, methods and/or operational flowcharts disclosed herein may be implemented using firmware or software, and firmware or software may be implemented to include modules, procedures, functions, etc. Firmware or software configured to perform the descriptions, functions, procedures, proposals, methods and/or operational flowcharts disclosed herein may be included in one or more processors 202 a and 202 b or stored in one or more memories 204 a and 204 b to be driven by one or more processors 202 a and 202 b. The descriptions, functions, procedures, proposals, methods and/or operational flowcharts disclosed herein implemented using firmware or software in the form of code, a command and/or a set of commands.

One or more memories 204 a and 204 b may be coupled with one or more processors 202 a and 202 b to store various types of data, signals, messages, information, programs, code, instructions and/or commands. One or more memories 204 a and 204 b may be composed of read only memories (ROMs), random access memories (RAMs), erasable programmable read only memories (EPROMs), flash memories, hard drives, registers, cache memories, computer-readable storage mediums and/or combinations thereof. One or more memories 204 a and 204 b may be located inside and/or outside one or more processors 202 a and 202 b. In addition, one or more memories 204 a and 204 b may be coupled with one or more processors 202 a and 202 b through various technologies such as wired or wireless connection.

One or more transceivers 206 a and 206 b may transmit user data, control information, radio signals/channels, etc. described in the methods and/or operational flowcharts of the present disclosure to one or more other apparatuses. One or more transceivers 206 a and 206 b may receive user data, control information, radio signals/channels, etc. described in the methods and/or operational flowcharts of the present disclosure from one or more other apparatuses. For example, one or more transceivers 206 a and 206 b may be coupled with one or more processors 202 a and 202 b to transmit/receive radio signals. For example, one or more processors 202 a and 202 b may perform control such that one or more transceivers 206 a and 206 b transmit user data, control information or radio signals to one or more other apparatuses. In addition, one or more processors 202 a and 202 b may perform control such that one or more transceivers 206 a and 206 b receive user data, control information or radio signals from one or more other apparatuses. In addition, one or more transceivers 206 a and 206 b may be coupled with one or more antennas 208 a and 208 b, and one or more transceivers 206 a and 206 b may be configured to transmit/receive user data, control information, radio signals/channels, etc. described in the descriptions, functions, procedures, proposals, methods and/or operational flowcharts disclosed herein through one or more antennas 208 a and 208 b. In the present disclosure, one or more antennas may be a plurality of physical antennas or a plurality of logical antennas (e.g., antenna ports). One or more transceivers 206 a and 206 b may convert the received radio signals/channels, etc. from RF band signals to baseband signals, in order to process the received user data, control information, radio signals/channels, etc. using one or more processors 202 a and 202 b. One or more transceivers 206 a and 206 b may convert the user data, control information, radio signals/channels processed using one or more processors 202 a and 202 b from baseband signals into RF band signals. To this end, one or more transceivers 206 a and 206 b may include (analog) oscillator and/or filters.

### Structure of Wireless Device Applicable to the Present Disclosure

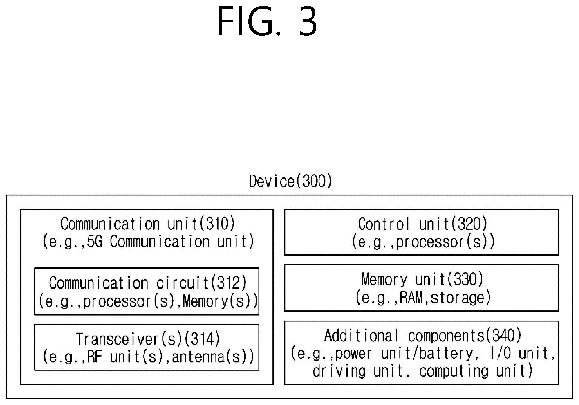

FIG. 3 shows another example of a wireless device applicable to the present disclosure.

Referring to FIG. 3, a wireless device 300 may correspond to the wireless devices 200 a and 200 b of FIG. 2 and include various elements, components, units/portions and/or modules. For example, the wireless device 300 may include a communication unit 310, a control unit (controller) 320, a memory unit (memory) 330 and additional components 340. The communication unit may include a communication circuit 312 and a transceiver(s) 314. For example, the communication circuit 312 may include one or more processors 202 a and 202 b and/or one or more memories 204 a and 204 b of FIG. 2. For example, the transceiver(s) 314 may include one or more transceivers 206 a and 206 b and/or one or more antennas 208 a and 208 b of FIG. 2. The control unit 320 may be electrically coupled with the communication unit 310, the memory unit 330 and the additional components 340 to control overall operation of the wireless device. For example, the control unit 320 may control electrical/mechanical operation of the wireless device based on a program/code/instruction/information stored in the memory unit 330. In addition, the control unit 320 may transmit the information stored in the memory unit 330 to the outside (e.g., another communication device) through the wireless/wired interface using the communication unit 310 over a wireless/wired interface or store information received from the outside (e.g., another communication device) through the wireless/wired interface using the communication unit 310 in the memory unit 330.

The additional components 340 may be variously configured according to the types of the wireless devices. For example, the additional components 340 may include at least one of a power unit/battery, an input/output unit, a driving unit or a computing unit. Without being limited thereto, the wireless device 300 may be implemented in the form of the robot (FIG. 1, 100 a), the vehicles (FIG. 1, 100 b-1 and 100 b-2), the XR device (FIG. 1, 100 c), the hand-held device (FIG. 1, 100 d), the home appliance (FIG. 1, 100 e), the IoT device (FIG. 1, 100 f), a digital broadcast terminal, a hologram apparatus, a public safety apparatus, an MTC apparatus, a medical apparatus, a Fintech device (financial device), a security device, a climate/environment device, an AI server/device (FIG. 1, 140), the base station (FIG. 1, 120), a network node, etc. The wireless device may be movable or may be used at a fixed place according to use example/service.

In FIG. 3, various elements, components, units/portions and/or modules in the wireless device 300 may be coupled with each other through wired interfaces or at least some thereof may be wirelessly coupled through the communication unit 310. For example, in the wireless device 300, the control unit 320 and the communication unit 310 may be coupled by wire, and the control unit 320 and the first unit (e.g., 130 or 140) may be wirelessly coupled through the communication unit 310. In addition, each element, component, unit/portion and/or module of the wireless device 300 may further include one or more elements. For example, the control unit 320 may be composed of a set of one or more processors. For example, the control unit 320 may be composed of a set of a communication control processor, an application processor, an electronic control unit (ECU), a graphic processing processor, a memory control processor, etc. In another example, the memory unit 330 may be composed of a random access memory (RAM), a dynamic RAM (DRAM), a read only memory (ROM), a flash memory, a volatile memory, a non-volatile memory and/or a combination thereof.

### Hand-Held Device Applicable to the Present Disclosure

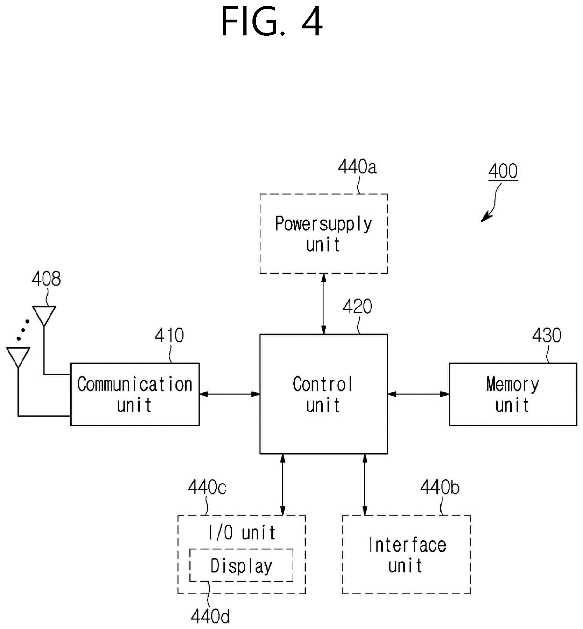

FIG. 4 shows an example of a hand-held device applicable to the present disclosure.

FIG. 4 shows a hand-held device applicable to the present disclosure. The hand-held device may include a smartphone, a smart pad, a wearable device (e.g., a smart watch or smart glasses), and a hand-held computer (e.g., a laptop, etc.). The hand-held device may be referred to as a mobile station (MS), a user terminal (UT), a mobile subscriber station (MSS), a subscriber station (SS), an advanced mobile station (AMS) or a wireless terminal (WT).

Referring to FIG. 4, the hand-held device 400 may include an antenna unit (antenna) 408, a communication unit (transceiver) 410, a control unit (controller) 420, a memory unit (memory) 430, a power supply unit (power supply) 440 a, an interface unit (interface) 440 b, and an input/output unit 440 c. An antenna unit (antenna) 408 may be part of the communication unit 410. The blocks 410 to 430/440 a to 440 c may correspond to the blocks 310 to 330/340 of FIG. 3, respectively.

The communication unit 410 may transmit and receive signals (e.g., data, control signals, etc.) to and from other wireless devices or base stations. The control unit 420 may control the components of the hand-held device 400 to perform various operations. The control unit 420 may include an application processor (AP). The memory unit 430 may store data/parameters/program/code/instructions necessary to drive the hand-held device 400. In addition, the memory unit 430 may store input/output data/information, etc. The power supply unit 440 a may supply power to the hand-held device 400 and include a wired/wireless charging circuit, a battery, etc. The interface unit 440 b may support connection between the hand-held device 400 and another external device. The interface unit 440 b may include various ports (e.g., an audio input/output port and a video input/output port) for connection with the external device. The input/output unit 440 c may receive or output video information/signals, audio information/signals, data and/or user input information. The input/output unit 440 c may include a camera, a microphone, a user input unit, a display 440 d, a speaker and/or a haptic module.

For example, in case of data communication, the input/output unit 440 c may acquire user input information/signal (e.g., touch, text, voice, image or video) from the user and store the user input information/signal in the memory unit 430. The communication unit 410 may convert the information/signal stored in the memory into a radio signal and transmit the converted radio signal to another wireless device directly or transmit the converted radio signal to a base station. In addition, the communication unit 410 may receive a radio signal from another wireless device or the base station and then restore the received radio signal into original information/signal. The restored information/signal may be stored in the memory unit 430 and then output through the input/output unit 440 c in various forms (e.g., text, voice, image, video and haptic).

### Type of Wireless Device Applicable to the Present Disclosure

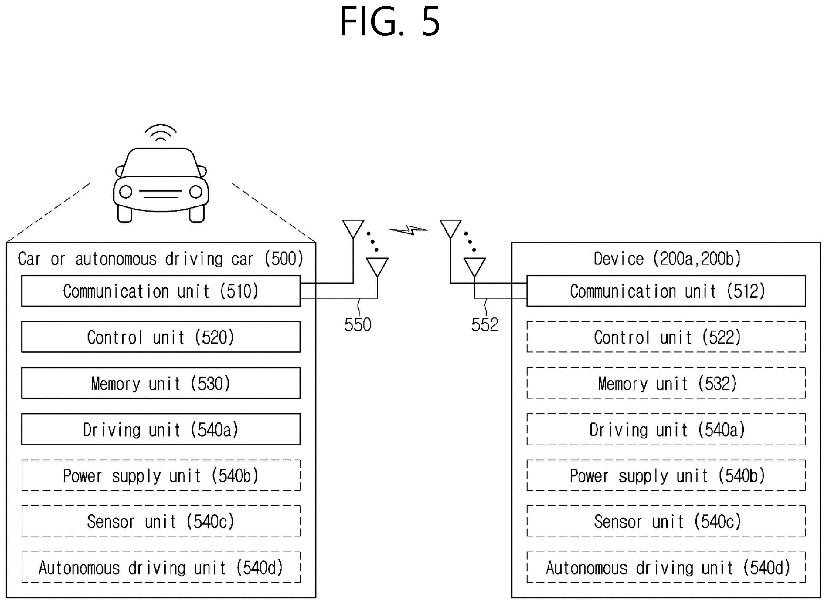

FIG. 5 shows an example of a car or an autonomous driving car applicable to the present disclosure.

FIG. 5 shows a car or an autonomous driving vehicle applicable to the present disclosure. The car or the autonomous driving car may be implemented as a mobile robot, a vehicle, a train, a manned/unmanned aerial vehicle (AV), a ship, etc. and the type of the car is not limited.

Referring to FIG. 5, the car or autonomous driving car 500 may include an antenna unit (antenna) 508, a communication unit (transceiver) 510, a control unit (controller) 520, a driving unit 540 a, a power supply unit (power supply) 540 b, a sensor unit 540 c, and an autonomous driving unit 540 d. The antenna unit 550 may be configured as part of the communication unit 510. The blocks 510/530/540 a to 540 d correspond to the blocks 410/430/440 of FIG. 4.

The communication unit 510 may transmit and receive signals (e.g., data, control signals, etc.) to and from external devices such as another vehicle, a base station (e.g., a base station, a road side unit, etc.), and a server. The control unit 520 may control the elements of the car or autonomous driving car 500 to perform various operations. The control unit 520 may include an electronic control unit (ECU).

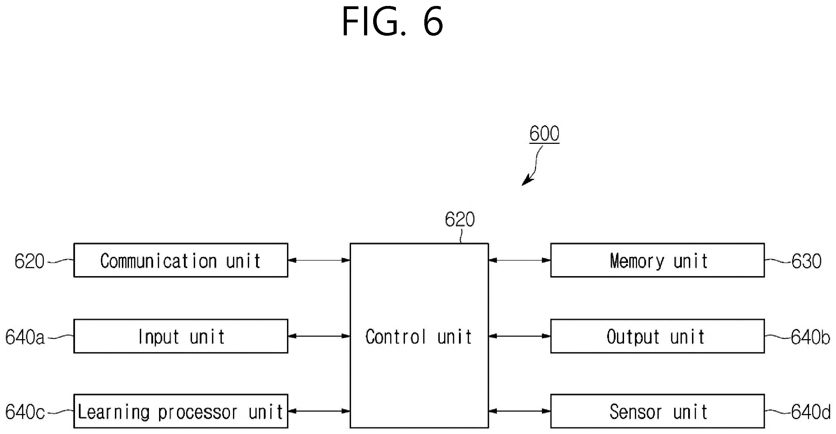

FIG. 6 shows an example of artificial intelligence (AI) device applicable to the present disclosure. For example, the AI device may be implemented as fixed or movable devices such as a TV, a projector, a smartphone, a PC, a laptop, a digital broadcast terminal, a tablet PC, a wearable device, a set-top box (STB), a radio, a washing machine, a refrigerator, a digital signage, a robot, a vehicle, or the like.

Referring to FIG. 6, the AI device 600 may include a communication unit (transceiver) 610, a control unit (controller) 620, a memory unit (memory) 630, an input/output unit 640 a/640 b, a leaning processor unit (learning processor) 640 c and a sensor unit 640 d. The blocks 610 to 630/640 a to 640 d may correspond to the blocks 310 to 330/340 of FIG. 3, respectively.

The communication unit 610 may transmit and receive wired/wireless signals (e.g., sensor information, user input, learning models, control signals, etc.) to and from external devices such as another AI device (e.g., FIG. 1, 100 x, 120 or 140) or the AI server (FIG. 1, 140) using wired/wireless communication technology. To this end, the communication unit 610 may transmit information in the memory unit 630 to an external device or transfer a signal received from the external device to the memory unit 630.

The control unit 620 may determine at least one executable operation of the AI device 600 based on information determined or generated using a data analysis algorithm or a machine learning algorithm. In addition, the control unit 620 may control the components of the AI device 600 to perform the determined operation. For example, the control unit 620 may request, search for, receive or utilize the data of the learning processor unit 640 c or the memory unit 630, and control the components of the AI device 600 to perform predicted operation or operation, which is determined to be desirable, of at least one executable operation. In addition, the control unit 620 may collect history information including operation of the AI device 600 or user's feedback on the operation and store the history information in the memory unit 630 or the learning processor unit 640 c or transmit the history information to the AI server (FIG. 1, 140). The collected history information may be used to update a learning model.

The memory unit 630 may store data supporting various functions of the AI device 600. For example, the memory unit 630 may store data obtained from the input unit 640 a, data obtained from the communication unit 610, output data of the learning processor unit 640 c, and data obtained from the sensing unit 640. In addition, the memory unit 630 may store control information and/or software code necessary to operate/execute the control unit 620.

The input unit 640 a may acquire various types of data from the outside of the AI device 600. For example, the input unit 640 a may acquire learning data for model learning, input data, to which the learning model will be applied, etc. The input unit 640 a may include a camera, a microphone and/or a user input unit. The output unit 640 b may generate video, audio or tactile output. The output unit 640 b may include a display, a speaker and/or a haptic module. The sensing unit 640 may obtain at least one of internal information of the AI device 600, the surrounding environment information of the AI device 600 and user information using various sensors. The sensing unit 640 may include a proximity sensor, an illumination sensor, an acceleration sensor, a magnetic sensor, a gyro sensor, an inertia sensor, a red green blue (RGB) sensor, an infrared (IR) sensor, a finger scan sensor, an ultrasonic sensor, an optical sensor, a microphone and/or a radar.

The learning processor unit 640 c may train a model composed of an artificial neural network using training data. The learning processor unit 640 c may perform AI processing along with the learning processor unit of the AI server (FIG. 1, 140). The learning processor unit 640 c may process information received from an external device through the communication unit 610 and/or information stored in the memory unit 630. In addition, the output value of the learning processor unit 640 c may be transmitted to the external device through the communication unit 610 and/or stored in the memory unit 630.

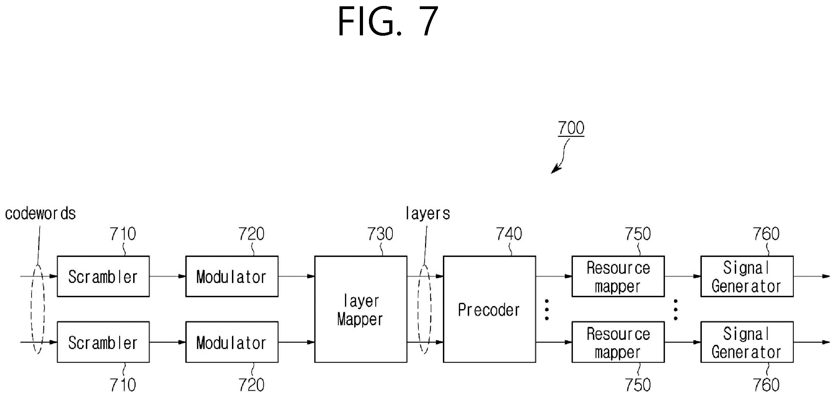

FIG. 7 shows a method of processing a transmitted signal applicable to the present disclosure. For example, the transmitted signal may be processed by a signal processing circuit. At this time, a signal processing circuit 700 may include a scrambler 710, a modulator 720, a layer mapper 730, a precoder 740, a resource mapper 750, and a signal generator 760. At this time, for example, the operation/function of FIG. 7 may be performed by the processors 202 a and 202 b and/or the transceiver 206 a and 206 b of FIG. 2. In addition, for example, the hardware element of FIG. 7 may be implemented in the processors 202 a and 202 b of FIG. 2 and/or the transceivers 206 a and 206 b of FIG. 2. For example, blocks 710 to 760 may be implemented in the processors 202 a and 202 b of FIG. 2. In addition, blocks 710 to 750 may be implemented in the processors 202 a and 202 b of FIG. 2 and a block 760 may be implemented in the transceivers 206 a and 206 b of FIG. 2, without being limited to the above-described embodiments.

A codeword may be converted into a radio signal through the signal processing circuit 700 of FIG. 7. Here, the codeword is a coded bit sequence of an information block. The information block may include a transport block (e.g., a UL-SCH transport block or a DL-SCH transport block). The radio signal may be transmitted through various physical channels (e.g., a PUSCH and a PDSCH). Specifically, the codeword may be converted into a bit sequence scrambled by the scrambler 710. The scramble sequence used for scramble is generated based in an initial value and the initial value may include ID information of a wireless device, etc. The scrambled bit sequence may be modulated into a modulated symbol sequence by the modulator 720. The modulation method may include pi/2-binary phase shift keying (pi/2-BPSK), m-phase shift keying (m-PSK), m-quadrature amplitude modulation (m-QAM), etc.

A complex modulation symbol sequence may be mapped to one or more transport layer by the layer mapper 730. Modulation symbols of each transport layer may be mapped to corresponding antenna port(s) by the precoder 740 (precoding). The output z of the precoder 740 may be obtained by multiplying the output y of the layer mapper 730 by an N*M precoding matrix W. Here, N may be the number of antenna ports and M may be the number of transport layers. Here, the precoder 740 may perform precoding after transform precoding (e.g., discrete Fourier transform (DFT)) for complex modulation symbols. In addition, the precoder 740 may perform precoding without performing transform precoding.

The resource mapper 750 may map modulation symbols of each antenna port to time-frequency resources. The time-frequency resources may include a plurality of symbols (e.g., a CP-OFDMA symbol and a DFT-s-OFDMA symbol) in the time domain and include a plurality of subcarriers in the frequency domain. The signal generator 760 may generate a radio signal from the mapped modulation symbols, and the generated radio signal may be transmitted to another device through each antenna. To this end, the signal generator 760 may include an inverse fast Fourier transform (IFFT) module, a cyclic prefix (CP) insertor, a digital-to-analog converter (DAC), a frequency uplink converter, etc.

A signal processing procedure for a received signal in the wireless device may be configured as the inverse of the signal processing procedures 710 to 760 of FIG. 7. For example, the wireless device (e.g., 200 a or 200 b of FIG. 2) may receive a radio signal from the outside through an antenna port/transceiver. The received radio signal may be converted into a baseband signal through a signal restorer. To this end, the signal restorer may include a frequency downlink converter, an analog-to-digital converter (ADC), a CP remover, and a fast Fourier transform (FFT) module. Thereafter, the baseband signal may be restored to a codeword through a resource de-mapper process, a postcoding process, a demodulation process and a de-scrambling process. The codeword may be restored to an original information block through decoding. Accordingly, a signal processing circuit (not shown) for a received signal may include a signal restorer, a resource de-mapper, a postcoder, a demodulator, a de-scrambler and a decoder.

### 6G Communication System

A 6G (wireless communication) system has purposes such as (i) very high data rate per device, (ii) a very large number of connected devices, (iii) global connectivity, (iv) very low latency, (v) decrease in energy consumption of battery-free IoT devices, (vi) ultra-reliable connectivity, and (vii) connected intelligence with machine learning capacity. The vision of the 6G system may include four aspects such as "intelligent connectivity", "deep connectivity", "holographic connectivity" and "ubiquitous connectivity", and the 6G system may satisfy the requirements shown in Table 1 below. That is, Table 1 shows the requirements of the 6G system.

**[Table 1]**

| | |
|---|---|
| Per device peak data rate | 1 Tbps |
| E2E latency | 1 ms |
| Maximum spectral efficiency | 100 bps/Hz |
| Mobility support | Up to 1000 km/hr |
| Satellite integration | Fully |
| AI | Fully |
| Autonomous vehicle | Fully |
| XR | Fully |
| Haptic Communication | Fully |

At this time, the 6G system may have key factors such as enhanced mobile broadband (eMBB), ultra-reliable low latency communications (URLLC), massive machine type communications (mMTC), AI integrated communication, tactile Internet, high throughput, high network capacity, high energy efficiency, low backhaul and access network congestion and enhanced data security.

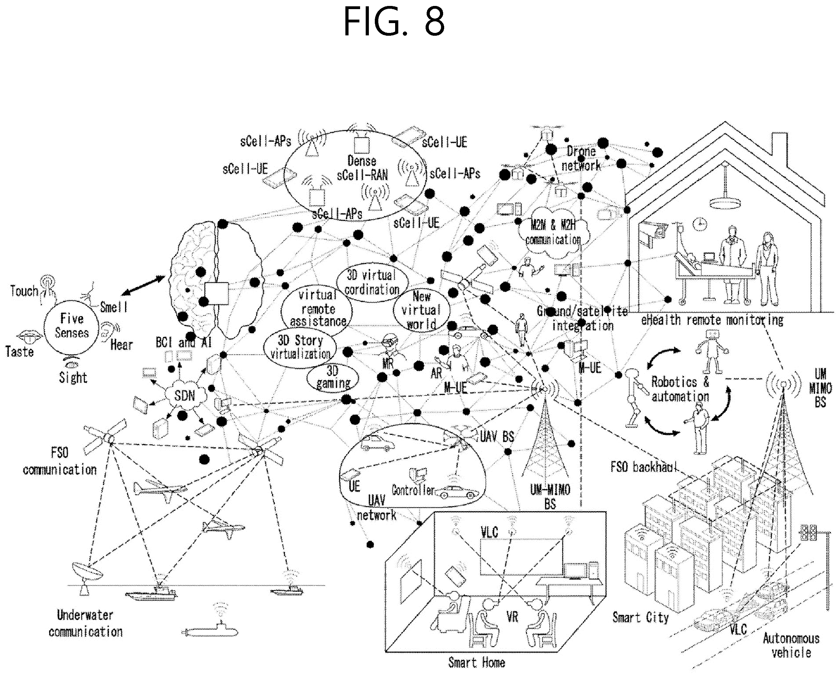

FIG. 8 shows an example of a communication structure providable in a 6G system applicable to the present disclosure.

Referring to FIG. 8, the 6G system will have 50 times higher simultaneous wireless communication connectivity than a 5G wireless communication system. URLLC, which is the key feature of 5G, will become more important technology by providing end-to-end latency less than 1 ms in 6G communication. At this time, the 6G system may have much better volumetric spectrum efficiency unlike frequently used domain spectrum efficiency. The 6G system may provide advanced battery technology for energy harvesting and very long battery life and thus mobile devices may not need to be separately charged in the 6G system.

### Core Implementation Technology of 6G System

### - Artificial Intelligence (AI)

Technology which is most important in the 6G system and will be newly introduced is AI. AI was not involved in the 4G system. A 5G system will support partial or very limited AI. However, the 6G system will support AI for full automation. Advance in machine learning will create a more intelligent network for real-time communication in 6G. When AI is introduced to communication, real-time data transmission may be simplified and improved. AI may determine a method of performing complicated target tasks using countless analysis. That is, AI may increase efficiency and reduce processing delay.

Time-consuming tasks such as handover, network selection or resource scheduling may be immediately performed by using AI. AI may play an important role even in M2M, machine-to-human and human-to-machine communication. In addition, AI may be rapid communication in a brain computer interface (BCI). An AI based communication system may be supported by meta materials, intelligent structures, intelligent networks, intelligent devices, intelligent recognition radios, self-maintaining wireless networks and machine learning.

Recently, attempts have been made to integrate AI with a wireless communication system in the application layer or the network layer, but deep learning have been focused on the wireless resource management and allocation field. However, such studies are gradually developed to the MAC layer and the physical layer, and, particularly, attempts to combine deep learning in the physical layer with wireless transmission are emerging. AI-based physical layer transmission means applying a signal processing and communication mechanism based on an AI driver rather than a traditional communication framework in a fundamental signal processing and communication mechanism. For example, channel coding and decoding based on deep learning, signal estimation and detection based on deep learning, multiple input multiple output (MIMO) mechanisms based on deep learning, resource scheduling and allocation based on AI, etc. may be included.

Machine learning may be used for channel estimation and channel tracking and may be used for power allocation, interference cancellation, etc. in the physical layer of DL. In addition, machine learning may be used for antenna selection, power control, symbol detection, etc. in the MIMO system.

However, application of a deep neutral network (DNN) for transmission in the physical layer may have the following problems.

Deep learning-based AI algorithms require a lot of training data in order to optimize training parameters. However, due to limitations in acquiring data in a specific channel environment as training data, a lot of training data is used offline. Static training for training data in a specific channel environment may cause a contradiction between the diversity and dynamic characteristics of a radio channel.

In addition, currently, deep learning mainly targets real signals. However, the signals of the physical layer of wireless communication are complex signals. For matching of the characteristics of a wireless communication signal, studies on a neural network for detecting a complex domain signal are further required.

Hereinafter, machine learning will be described in greater detail.

Machine learning refers to a series of operations to train a machine in order to build a machine which can perform tasks which cannot be performed or are difficult to be performed by people. Machine learning requires data and learning models. In machine learning, data learning methods may be roughly divided into three methods, that is, supervised learning, unsupervised learning and reinforcement learning.

Neural network learning is to minimize output error. Neural network learning refers to a process of repeatedly inputting training data to a neural network, calculating the error of the output and target of the neural network for the training data, backpropagating the error of the neural network from the output layer of the neural network to an input layer in order to reduce the error and updating the weight of each node of the neural network.

Supervised learning may use training data labeled with a correct answer and the unsupervised learning may use training data which is not labeled with a correct answer. That is, for example, in case of supervised learning for data classification, training data may be labeled with a category. The labeled training data may be input to the neural network, and the output (category) of the neural network may be compared with the label of the training data, thereby calculating the error. The calculated error is backpropagated from the neural network backward (that is, from the output layer to the input layer), and the connection weight of each node of each layer of the neural network may be updated according to backpropagation. Change in updated connection weight of each node may be determined according to the learning rate. Calculation of the neural network for input data and backpropagation of the error may configure a learning cycle (epoch). The learning data is differently applicable according to the number of repetitions of the learning cycle of the neural network. For example, in the early phase of learning of the neural network, a high learning rate may be used to increase efficiency such that the neural network rapidly ensures a certain level of performance and, in the late phase of learning, a low learning rate may be used to increase accuracy.

The learning method may vary according to the feature of data. For example, for the purpose of accurately predicting data transmitted from a transmitter in a receiver in a communication system, learning may be performed using supervised learning rather than unsupervised learning or reinforcement learning.

The learning model corresponds to the human brain and may be regarded as the most basic linear model. However, a paradigm of machine learning using a neural network structure having high complexity, such as artificial neural networks, as a learning model is referred to as deep learning.

Neural network cores used as a learning method may roughly include a deep neural network (DNN) method, a convolutional deep neural network (CNN) method and a recurrent Boltzmman machine (RNN) method. Such a learning model is applicable.

### Terahertz (THz) Communication

THz communication is applicable to the 6G system. For example, a data rate may increase by increasing bandwidth. This may be performed by using sub-THz communication with wide bandwidth and applying advanced massive MIMO technology.

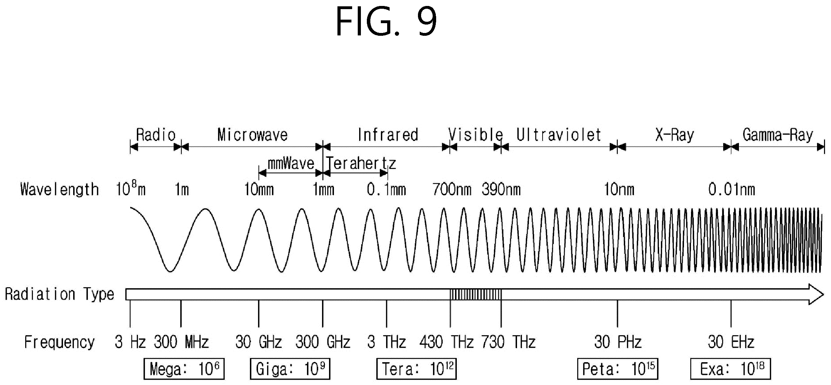

FIG. 9 shows an electromagnetic spectrum applicable to the present disclosure. For example, referring to FIG. 9, THz waves which are known as sub-millimeter radiation, generally indicates a frequency band between 0.1 THz and 10 THz with a corresponding wavelength in a range of 0.03 mm to 3 mm. A band range of 100 GHz to 300 GHz (sub THz band) is regarded as a main part of the THz band for cellular communication. When the sub-THz band is added to the mmWave band, the 6G cellular communication capacity increases. 300 GHz to 3 THz of the defined THz band is in a far infrared (IR) frequency band. A band of 300 GHz to 3 THz is a part of an optical band but is at the border of the optical band and is just behind an RF band. Accordingly, the band of 300 GHz to 3 THz has similarity with RF.

The main characteristics of THz communication include (i) bandwidth widely available to support a very high data rate and (ii) high path loss occurring at a high frequency (a high directional antenna is indispensable). A narrow beam width generated by the high directional antenna reduces interference. The small wavelength of a THz signal allows a larger number of antenna elements to be integrated with a device and BS operating in this band. Therefore, an advanced adaptive arrangement technology capable of overcoming a range limitation may be used.

### THz Wireless Communication

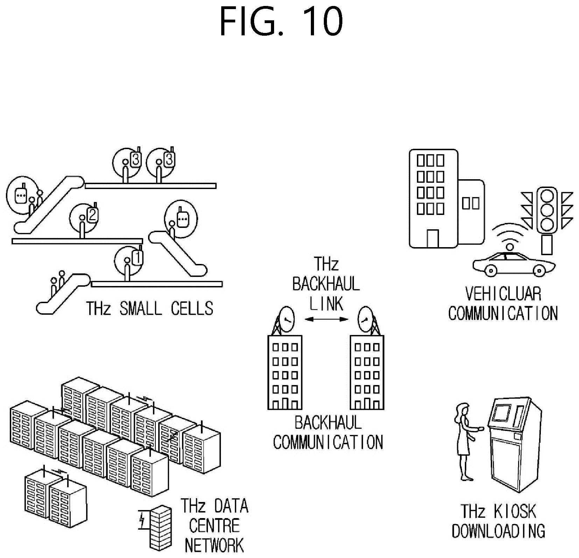

FIG. 10 shows a THz communication method applicable to the present disclosure.

Referring to FIG. 10, THz wireless communication uses a THz wave having a frequency of approximately 0.1 to 10 THz (1 THz=1012 Hz), and may mean terahertz (THz) band wireless communication using a very high carrier frequency of 100 GHz or more. The THz wave is located between radio frequency (RF)/millimeter (mm) and infrared bands, and (i) transmits non-metallic/non-polarizable materials better than visible/infrared rays and has a shorter wavelength than the RF/millimeter wave and thus high straightness and is capable of beam convergence.

In addition, the photon energy of the THz wave is only a few meV and thus is harmless to the human body. A frequency band which will be used for THz wireless communication may be a D-band (110 GHz to 170 GHz) or a H-band (220 GHz to 325 GHz) band with low propagation loss due to molecular absorption in air. Standardization discussion on THz wireless communication is being discussed mainly in IEEE 802.15 THz working group (WG), in addition to 3GPP, and standard documents issued by a task group (TG) of IEEE 802.15 (e.g., TG3d, TG3e) specify and supplement the description of this disclosure. The THz wireless communication may be applied to wireless cognition, sensing, imaging, wireless communication, and THz navigation.

Specifically, referring to FIG. 10, a THz wireless communication scenario may be classified into a macro network, a micro network, and a nanoscale network. In the macro network, THz wireless communication may be applied to vehicle-to-vehicle (V2V) connection and backhaul/fronthaul connection. In the micro network, THz wireless communication may be applied to near-field communication such as indoor small cells, fixed point-to-point or multi-point connection such as wireless connection in a data center or kiosk downloading. Table 2 below shows an example of technology which may be used in the THz wave.

**[Table 2]**

| | |
|---|---|
| **Transceivers Device** | Available immature: UTC-PD, RTD and SBD |
| **Modulation and coding** | Low order modulation techniques (OOK, QPSK), LDPC, Reed Soloman, Hamming, Polar, Turbo |
| **Antenna** | Omni and Directional, phased array with low number of antenna elements |
| **Bandwidth** | 69GHz (or 23 GHz) at 300GHz |
| **Channel models** | Partially |
| **Data rate** | 100Gbps |
| **Outdoor deployment** | No |
| **Free space loss** | High |
| **Coverage** | Low |
| **Radio Measurements** | 300GHz indoor |
| **Device size** | Few micrometers |

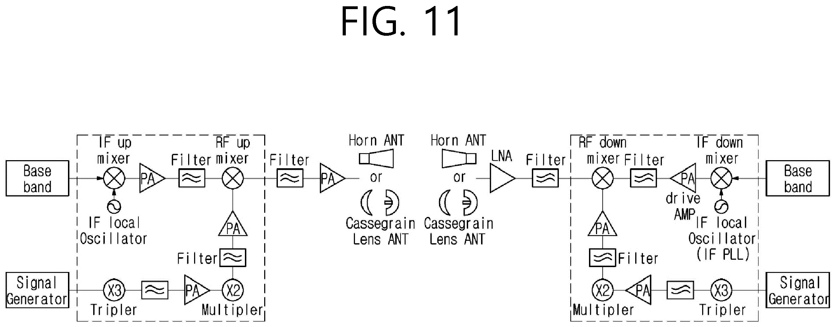

FIG. 11 shows a THz wireless communication transceiver applicable to the present disclosure. Referring to FIG. 11, THz wireless communication may be classified based on the method of generating and receiving THz. The THz generation method may be classified as an optical device or electronic device based technology.

At this time, the method of generating THz using an electronic device includes a method using a semiconductor device such as a resonance tunneling diode (RTD), a method using a local oscillator and a multiplier, a monolithic microwave integrated circuit (MMIC) method using a compound semiconductor high electron mobility transistor (HEMT) based integrated circuit, and a method using a Si-CMOS-based integrated circuit.

A core of an electronic device-based technology depends on development of a Monolithic Microwave Integrated Circuit (MMIC) technology composed of active elements such as a low noise amplifier (LNA), a mixer, a local oscillator (LO), a power amplifier (PA), etc., which configure an RF front-end, and a passive component technology such as an antenna, a filter, a connection component, etc. At this time, important parameters of the active elements for RF MMIC fabrication are a cutoff frequency and a maximum oscillation frequency.

In the case of FIG. 11, a multiplier (doubler, tripler, multiplier) is applied to increase the frequency, and radiation is performed by an antenna through a subharmonic mixer. Since the THz band forms a high frequency, a multiplier is essential. Here, the multiplier is a circuit having an output frequency which is N times an input frequency, and matches a desired harmonic frequency, and filters out all other frequencies. In addition, beamforming may be implemented by applying an array antenna or the like to the antenna of FIG. 11. In FIG. 11, IF represents an intermediate frequency, a tripler and a multiplier represents a multiplier, PA represents a power amplifier, and LNA represents a low noise amplifier, and PLL represents a phase-locked loop.

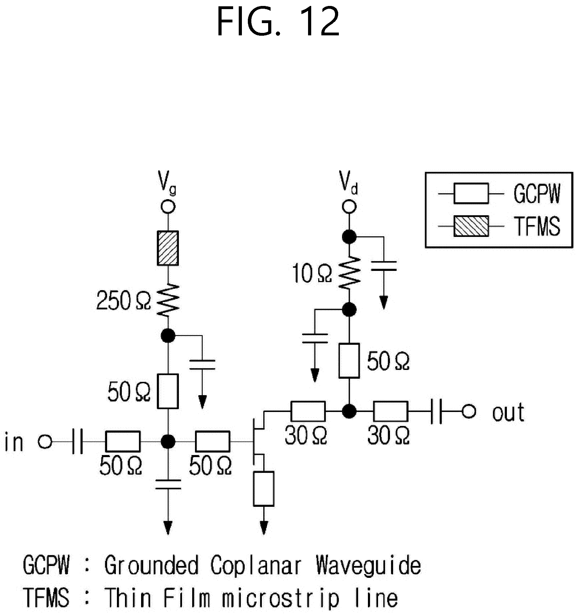

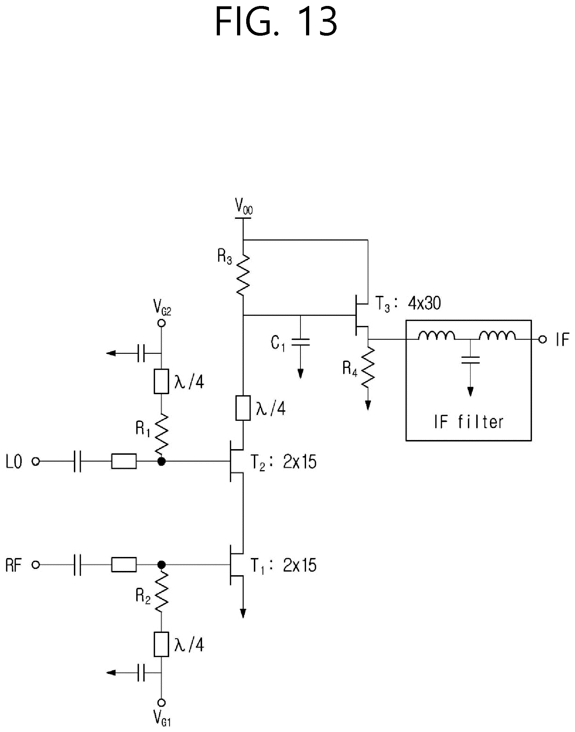

An LNA used in FIG. 11 may be specifically implemented as shown in FIG. 12. Specifically, FIG. 12 shows an example of a 210 GHz one-stage common source amplifier circuit configuration using a Metamorphic HEMT technology having a gate length of 50 nm. In addition, a mixer used in FIG. 11 may be implemented as shown in FIG. 13. Specifically, FIG. 13 shows an example of an active mixer MMIC circuit configuration of a dual gate structure using a 100 nm mHEMT technology.

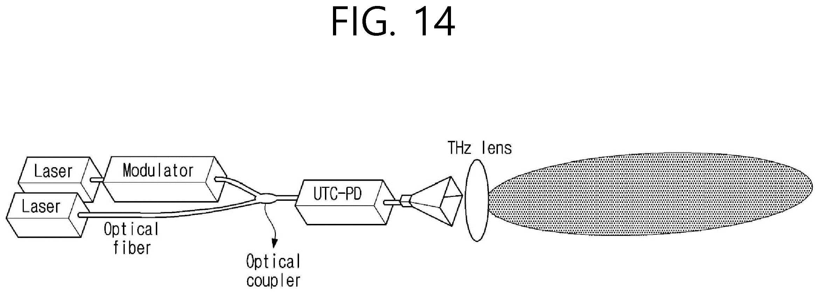

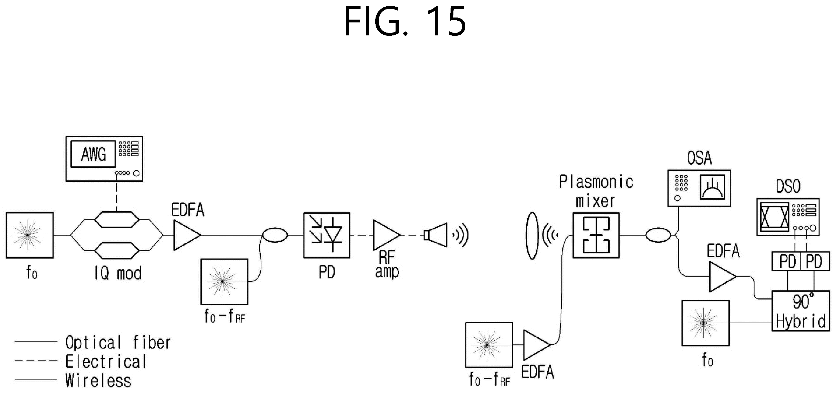

FIG. 14 shows a THz signal generation method applicable to the present disclosure. FIG. 15 shows a wireless communication transceiver applicable to the present disclosure.

Referring to FIGS. 14 and 15, the optical device-based THz wireless communication technology means a method of generating and modulating a THz signal using an optical device. The optical device-based THz signal generation technology refers to a technology that generates an ultrahigh-speed optical signal using a laser and an optical modulator, and converts it into a THz signal using an ultrahigh-speed photodetector. This technology is easy to increase the frequency compared to the technology using only the electronic device, can generate a high-power signal, and can obtain a flat response characteristic in a wide frequency band. In order to generate the THz signal based on the optical device, as shown in FIG. 14, a laser diode, a broadband optical modulator, and an ultrahigh-speed photodetector are required. In the case of FIG. 14, the light signals of two lasers having different wavelengths are combined to generate a THz signal corresponding to a wavelength difference between the lasers. In FIG. 14, an optical coupler refers to a semiconductor device that transmits an electrical signal using light waves to provide coupling with electrical isolation between circuits or systems, and a uni-travelling carrier photo-detector (UTC-PD) is one of photodetectors, which uses electrons as an active carrier and reduces the travel time of electrons by bandgap grading. The UTC-PD is capable of photodetection at 150 GHz or more. In FIG. 15, an erbium-doped fiber amplifier (EDFA) represents an optical fiber amplifier to which erbium is added, a photo detector (PD) represents a semiconductor device capable of converting an optical signal into an electrical signal, and OSA represents an optical sub assembly in which various optical communication functions photoelectric conversion, electrophonic conversion, etc.) are modularized as one component, and DSO represents a digital storage oscilloscope.

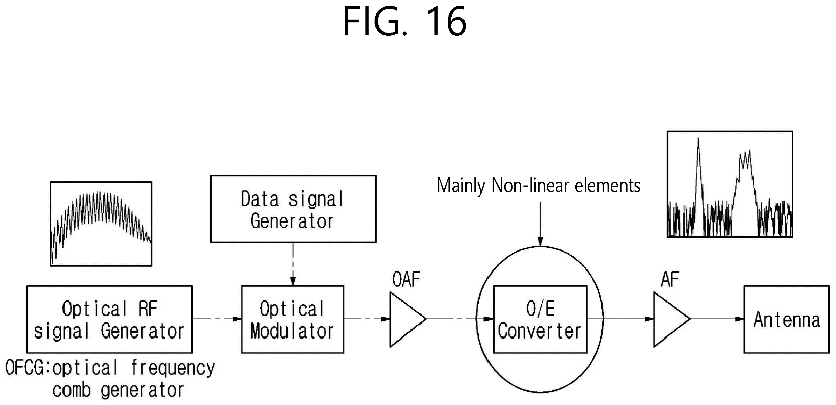

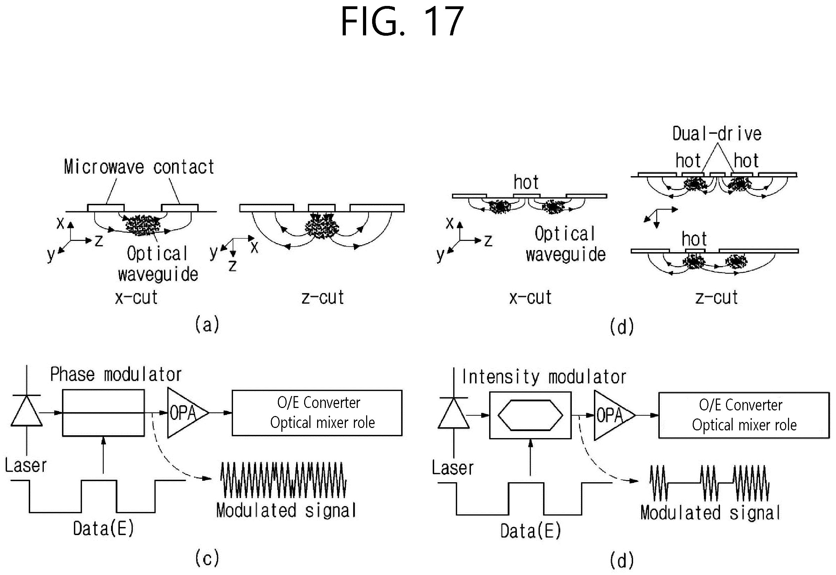

FIG. 16 shows a transmitter structure applicable to the present disclosure. FIG. 17 shows a modulator structure applicable to the present disclosure.

Referring to FIGS. 16 and 17, generally, the optical source of the laser may change the phase of a signal by passing through the optical wave guide. At this time, data is carried by changing electrical characteristics through microwave contact or the like. Thus, the optical modulator output is formed in the form of a modulated waveform. A photoelectric modulator (O/E converter) may generate THz pulses according to optical rectification operation by a nonlinear crystal, photoelectric conversion (O/E conversion) by a photoconductive antenna, and emission from a bunch of relativistic electrons. The terahertz pulse (THz pulse) generated in the above manner may have a length of a unit from femto second to Pico second. The photoelectric converter (O/E converter) performs down conversion using non-linearity of the device.

Given THz spectrum usage, multiple contiguous GHz bands are likely to be used as fixed or mobile service usage for the terahertz system. According to the outdoor scenario criteria, available bandwidth may be classified based on oxygen attenuation 10^2 dB/km in the spectrum of up to 1 THz. Accordingly, a framework in which the available bandwidth is composed of several band chunks may be considered. As an example of the framework, if the length of the terahertz pulse (THz pulse) for one carrier (carrier) is set to 50 ps, the bandwidth (BW) is about 20 GHz.

Effective down conversion from the infrared band to the terahertz band depends on how to utilize the nonlinearity of the O/E converter. That is, for down-conversion into a desired terahertz band (THz band), design of the photoelectric converter (O/E converter) having the most ideal non-linearity to move to the corresponding terahertz band (THz band) is required. If a photoelectric converter (O/E converter) which is not suitable for a target frequency band is used, there is a high possibility that an error occurs with respect to the amplitude and phase of the corresponding pulse.

In a single carrier system, a terahertz transmission/reception system may be implemented using one photoelectric converter. In a multi-carrier system, as many photoelectric converters as the number of carriers may be required, which may vary depending on the channel environment. Particularly, in the case of a multi-carrier system using multiple broadbands according to the plan related to the above-described spectrum usage, the phenomenon will be prominent, in this regard, a frame structure for the multi-carrier system can be considered. The down-frequency-converted signal based on the photoelectric converter may be transmitted in a specific resource region (e.g., a specific frame). The frequency domain of the specific resource region may include a plurality of chunks. Each chunk may be composed of at least one component carrier (CC).

### Specific embodiments of the disclosure

THz communication is expected to use a wider frequency bandwidth at a higher center frequency than mmWave and sub-6 GHz frequencies of existing 4G/5G communication. Therefore, due to phase noise in a high frequency band, a larger subcarrier spacing (SCS) than that of 5G New Radio (NR) communication may be used.

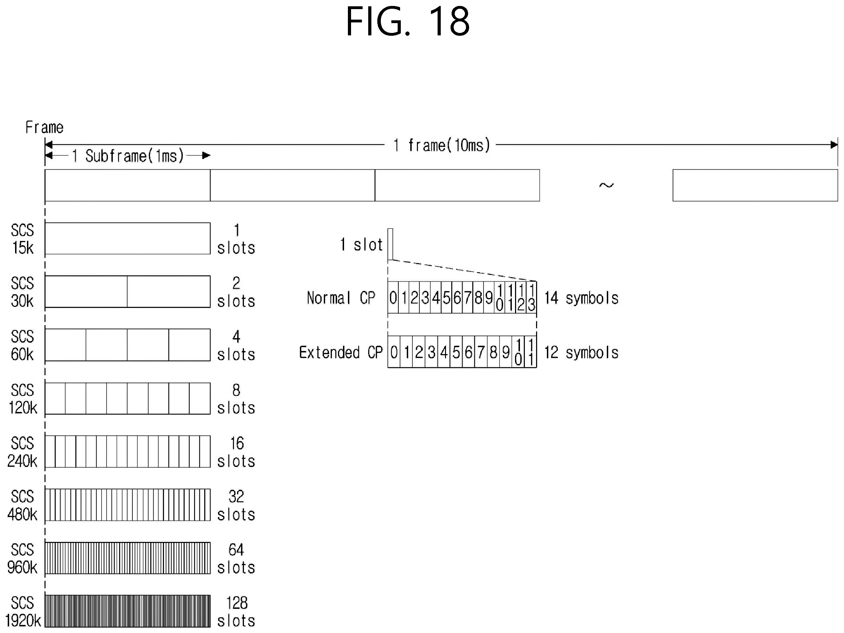

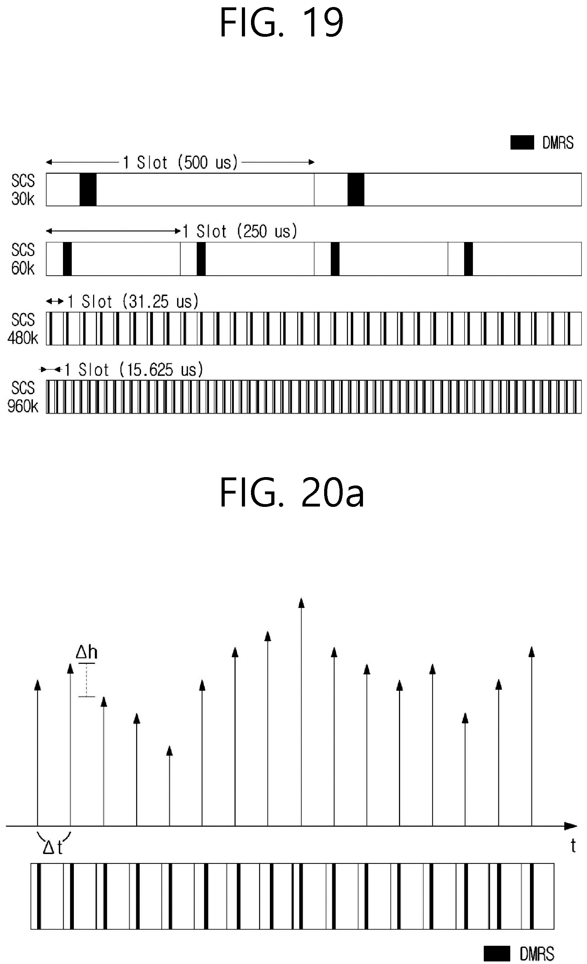

FIG. 18 shows an example of a frame structure of THz communication according to an embodiment of the present disclosure. A THz communication system may have a frame structure at a larger SCS together with a frame structure of 5G NR communication as shown in FIG. 18. Referring to FIG. 18, one frame may be composed of 10 subframes, and a number of slots composing a subframe may be proportional to the SCS. That is, as shown in FIG. 18, the number of slots composing one subframe may be 4 when the SCS is 60 kHz, and may be 64 when the SCS is 960 kHz. A reference signal for decoding a shared channel may be a demodulation reference signal (DMRS), and the DMRS may be allocated to one or two symbols per slot. In THz communication using a large SCS as shown in FIG. 19, the DMRS may be allocated at a faster period. Therefore, when a large SCS is used, since a slot interval becomes narrow, allocating the DMRS per slot may cause waste of communication resources.

That is, if a rate of change of a channel is at a level that may be supported by a period of the DMRS of existing 5G NR, when a scheme of allocating the DMRS per slot is used in the same manner as the existing scheme in THz communication using a high frequency, communication resources may be used inefficiently. Therefore, for efficient resource utilization, a method for flexibly allocating a reference signal according to a channel change state is required. In order to determine a period of the DMRS based on the channel change state, a procedure in which a UE or a base station measures a measurement value for the channel change state or receives the measurement value may be additionally required. As an example, the base station may calculate a channel variation amount based on a channel measurement value received from the UE. As another example, after calculating the channel variation amount based on the channel measurement value in the UE, the UE may report the channel variation amount itself to the base station. Accordingly, various methods capable of allocating a dynamic DMRS based on a channel change may be proposed.

The present disclosure proposes a technique for enabling efficient resource operation by configuring a slot group and reconfiguring a size of the slot group according to a channel state in THz communication. A UE or a base station may measure a channel variation rate through a process of calculating channel information through a channel estimation value and comparing the channel information with a reference value. If the channel variation rate is small, multiple slots may be grouped into one group and a reference signal may be transmitted at a slower period. Conversely, if the channel variation rate is large, the slot group size may be set to be smaller so that the reference signal may be transmitted at a faster period than before.

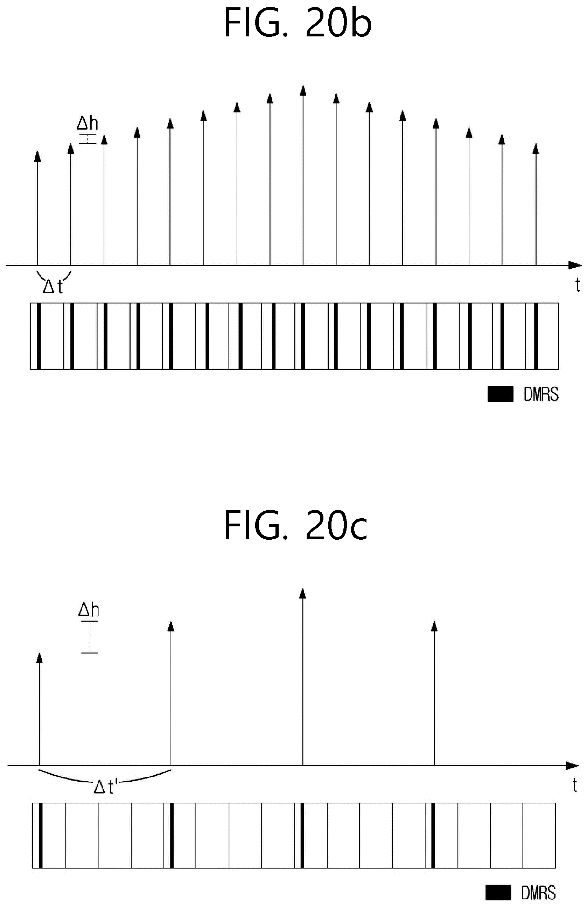

FIG. 20 shows an example of a procedure of performing channel estimation through a DMRS in a wireless communication system according to an embodiment of the present disclosure. Referring to FIG. 20, it may be identified that a channel quality value is measured through channel measurement in a case in which a channel changes fast and in a case in which a channel changes slowly.

First, the base station may allocate the DMRS at an interval of the same Δt in both a case in which the channel change is fast as shown in FIG. 20a and a case in which the channel change is slow as shown in FIG. 20b. In this case, in a case in which the channel change is slow, the difference in channel response values may appear smaller than in the channel with fast changes. Therefore, when the channel change is small, the base station may be able to cope with the channel change even if an interval between DMRSs is set to be longer as Δt' (Δt' > Δt) as shown in FIG. 20c. Therefore, in the case in which the channel change is slow as shown in FIG. 20c, the base station may use communication resources efficiently by allocating fewer DMRSs than in FIG. 20b.

When a scheme of allocating a DMRS symbol for each slot is used, the channel is measured at every fixed Δt time even in a situation as shown in FIG. 20b. Therefore, the disclosure proposes a method for changing Δt, which is an interval at which the DMRS for channel estimation is allocated. To this end, the base station may designate a plurality of slots as one slot group and may allocate the DMRS for each slot group. Accordingly, the slot group, not the slot, may be a basic unit for allocating the DMRS.

In order to prevent degradation of communication quality, even when channel information using a DMRS allocated within a slot group is used, an error rate of decoded data should be able to be maintained below a reference value. Therefore, a method for determining a size of a slot group for efficiently managing the error rate should be considered. The base station may determine the slot group size based on a channel variation rate and an error rate. This process may be differently designed in terms of signaling between the UE and the base station and a method for changing the slot group size according to a form of channel information reported by the UE to the base station and a method of reporting to the base station.

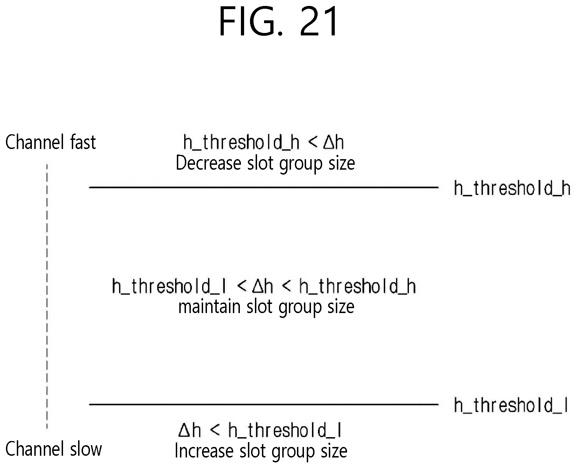

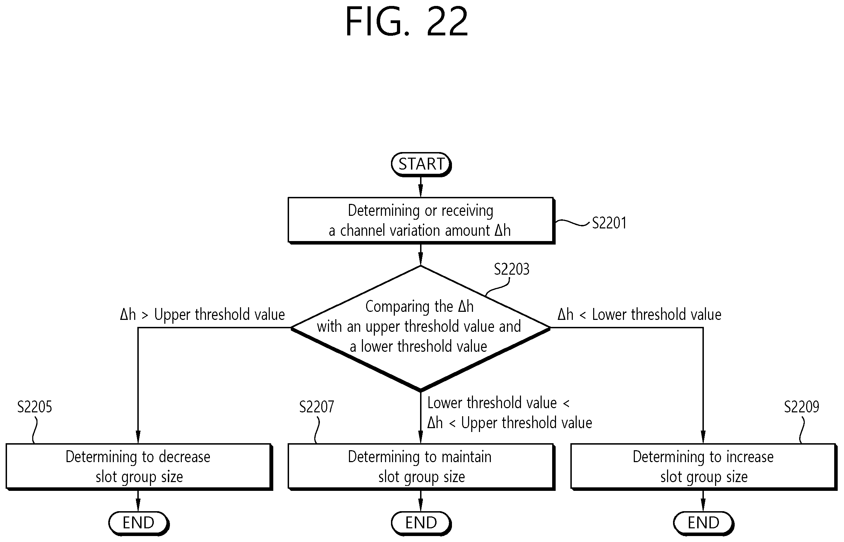

FIG. 21 and FIG. 22 show examples of a method and a procedure for setting a slot group size according to a channel variation amount according to an embodiment of the present disclosure.

In step S2201, the base station determines a channel variation amount Δh by using channel information received from the UE, or receives, from the UE, the channel variation amount Δh directly calculated by the UE.

In step S2203, the base station compares the channel variation amount with an upper threshold value and a lower threshold value. A method in which the base station determines the slot group size based on the channel variation amount may be expressed as shown in FIG. 21. First, an upper threshold value for the channel variation amount, h_threshold_h, and a lower threshold value for the channel variation amount, h_threshold_l, may be set. The upper threshold value and the lower threshold value may be changed according to an objective of an operator. The threshold values may be criteria for changing the slot group size according to the channel variation amount. Accordingly, when the channel variation amount is greater than the upper threshold value, the base station may determine that the channel change is fast. Accordingly, by performing step S2205, the base station decreases the slot group size to allocate more DMRSs. When the channel variation amount is less than the lower threshold value, the base station may determine that the channel change is slow. In this case, by performing step S2209, the base station increases the slot group size to allocate fewer DMRSs. When the channel variation amount is between the lower threshold value and the upper threshold value, the base station may determine that the channel variation amount is at a previous level. In this case, by performing step S2207, the slot group size may be maintained.

When the slot group size is changed/maintained through the above-described procedure in FIG. 22, a channel quality desired by an operator or a user may not be maintained. Therefore, a method for controlling a slot group based on channel quality may be additionally required.

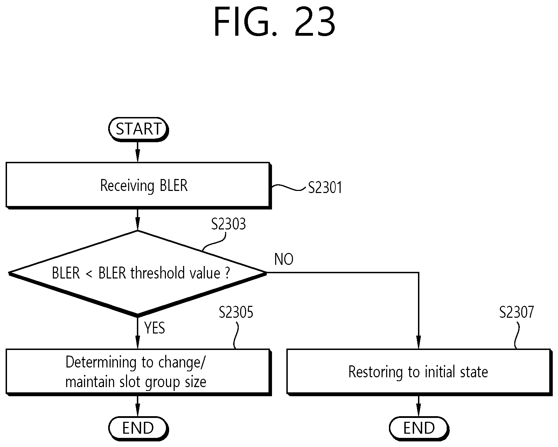

FIG. 23 shows an example of a method for determining a slot group size based on a block error rate (BLER) according to an embodiment of the present disclosure.

In step S2301, the base station receives the BLER from the UE. The BLER refers to a ratio of a number of error blocks to a total number of transmitted blocks, and may be an indicator indicating channel quality. The base station may identify whether the channel quality is maintained at or above a certain level through the BLER measured by the UE.

In step S2303, the base station determines whether the BLER is less than a threshold value. If the BLER is less than the threshold value, the base station may determine that communication quality is maintained at or above a certain level. Accordingly, the base station may perform step S2305 to determine to change or maintain the slot group size. A method for determining to change or maintain the slot group size may use the methods described above in FIG. 21 and FIG. 22. If the BLER is greater than the threshold value, the base station may determine that communication quality is degraded due to configuration of the slot group. Accordingly, the base station performs step S2307 to release the slot group and restores to an initial state. As an example, the base station may release the slot group and allocate the DMRS on a per-slot basis.

As described above, the base station may require information on a channel variation amount and the BLER in order to configure the slot group. The channel variation amount may be transmitted to the base station in various ways. The UE may perform channel measurement to transmit a channel gain to the base station, and the base station may determine the channel variation amount based on the channel gain received from the UE. As another example, the UE may determine the channel variation amount and then transmit the channel variation amount itself to the base station. Accordingly, a method by which the base station obtains information on the channel variation amount is not limited to a specific method.

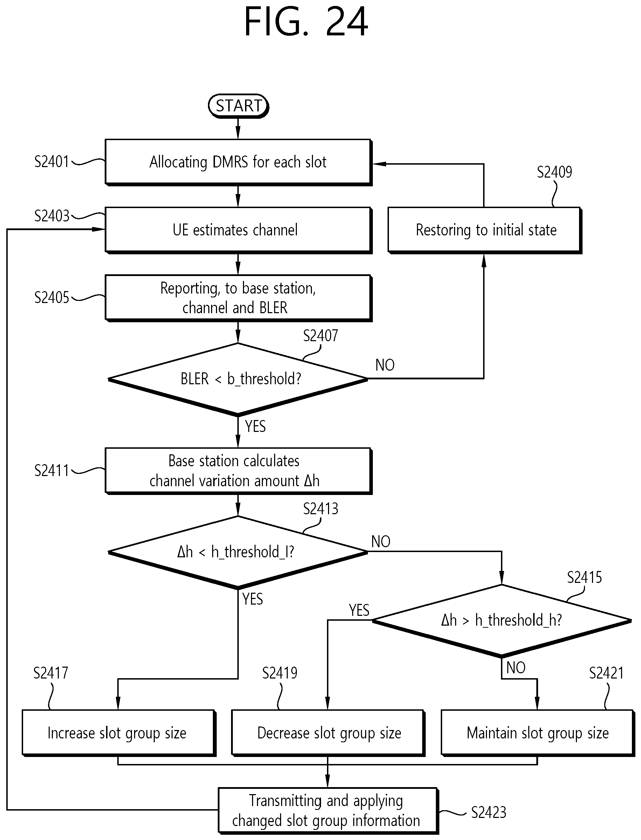

FIG. 24 shows an example of a procedure in which the base station calculates a channel variation amount and changes a slot group configuration according to an embodiment of the present disclosure. Referring to FIG. 24, the base station may measure the channel variation amount based on channel information received from the UE and may determine the slot group size.

In step S2401, the base station transmits, to the UE, a signal in which the DMRS is allocated for each slot. To this end, the base station may first transmit, to the UE, a configuration message indicating a number and positions in which the DMRS is allocated for each slot.

In step S2403, the UE performs channel estimation based on the received signal. The UE may estimate a channel gain, channel quality, etc., based on the DMRS. The UE may determine an estimated channel value based on a channel impulse response (CIR) and a channel transfer function (CTF). The channel impulse response refers to a response of a receiver to an impulse signal of a transmitter transmitted through a channel, and the channel transfer function refers to a function between a transmitted signal and a received signal. In addition, the UE may measure a BLER through decoding of the received signal.

In step S2405, the UE reports, to the base station, information on channel information and the BLER. The UE may transmit the information in a form of a measurement report message, and the measurement report message may include at least one of channel information and the BLER. In addition, a method in which the UE transmits the information on the channel information and the BLER to the base station is not limited to a specific method. Accordingly, the UE may transmit the estimated channel information together with the BLER to the base station through a physical channel, a control channel, an RRC message form, etc.

In step S2407, the base station compares the received BLER with a threshold value for the BLER. If the BLER value is greater than the threshold value, the base station performs step S2409, and if the BLER value is less than the threshold value, the base station performs step S2411.

In step S2409, the base station sets the slot group to an initial state. As described above, when the BLER value is greater than the threshold value, the base station may determine that communication quality required by an operator or a user is not satisfied and restores the slot group configuration to the initial state. Thereafter, the base station may allocate the DMRS per slot through performing step S2401.

In step S2411, the base station calculates the channel variation amount based on channel information of the UE. Step S2411 corresponds to a case in which the BLER value is less than the threshold value, and the base station may determine that communication quality is maintained at or above a certain level and may continue the slot group configuration. The base station should have a memory for storing previous channel information in order to calculate the channel variation amount.

In step S2413, the base station determines whether the channel variation amount is less than a lower threshold value. If the channel variation amount is less than the lower threshold value, the base station may determine that the channel is changing slowly. When the channel is changing slowly, the base station may allocate fewer DMRSs than before. Accordingly, the base station performs step S2417 to increase the slot group size. If the channel variation amount is greater than the lower threshold value, the base station performs step S2415.

In step S2415, the base station determines whether the channel variation amount is greater than an upper threshold value. If the channel variation amount is greater than the upper threshold value, the base station may determine that the channel is changing fast. When the channel is changing fast, the base station may allocate more DMRSs than before. Accordingly, the base station performs step S2419 to decrease the slot group size. If the channel variation amount is less than the upper threshold value, the base station may determine that the channel variation amount is between the lower threshold value and the upper threshold value. Accordingly, the base station may determine that the channel variation amount is similar to a previous level and performs step S2421 to maintain the slot group size.

In step S2423, the base station transmits the changed slot group information to the UE. The base station transmits, to the UE, a signal in which the DMRS is allocated for each group based on the changed slot group information. Thereafter, the base station performs the process again from step S2403, and the above-described procedure may be repeatedly performed.

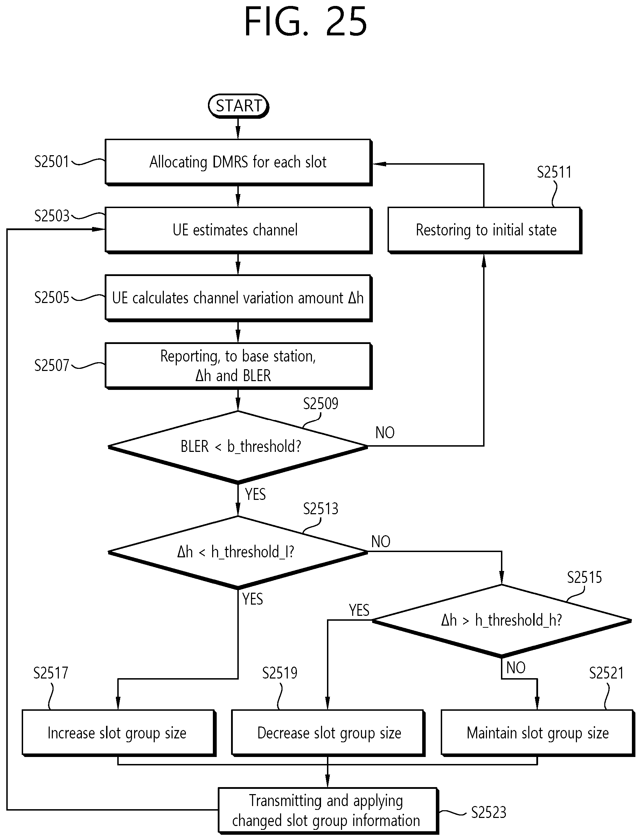

FIG. 25 shows an example of a procedure in which a base station changes a slot group configuration based on an amount of channel variation amount directly calculated by a UE according to an embodiment of the present disclosure.

In step S2501, the base station transmits, to the UE, a signal in which DMRSs are allocated for each slot. To this end, the base station may first transmit a configuration message indicating the number and positions of DMRSs allocated in each slot.

In step S2503, the UE performs channel estimation based on the received signal. The UE may estimate a channel gain, channel quality, etc., based on the DMRS. The UE may determine an estimated channel value estimated based on a channel impulse response (CIR) and a channel transfer function (CTF). In addition, the UE may measure a BLER through decoding of the received signal.

In step S2505, the UE calculates a channel variation amount Δh. The UE may compare previously measured channel information with previously received channel information to determine the channel variation amount. To this end, the UE should have a memory for storing previous channel variation amount.

In step S2507, the UE reports information on the channel variation amount Δh and the BLER to the base station. The UE may transmit the information in the form of a measurement report message, and the measurement report message may include the channel variation amount Δh and the BLER. In addition, a method by which the UE transmits the information on the channel variation amount Δh and the BLER to the base station is not limited to a specific method. Accordingly, the UE may transmit the channel variation amount together with the information related to the BLER to the base station through a physical channel, a control channel, an RRC message form, etc.

In step S2509, the base station compares the received BLER with a threshold value for the BLER. If the BLER value is greater than the threshold value, step S2511 is performed, and if the BLER value is less than the threshold value, step S2513 is performed.

In step S2511, the base station sets the slot group to an initial state. As described above, when the BLER value is greater than the threshold value, it may be determined that a communication quality required by an operator or a user is not satisfied, and thus the slot group configuration is restored to the initial state. Thereafter, DMRSs may be allocated for each slot through performing step S2501.

In step S2513, the base station determines whether the channel variation amount is less than a lower threshold value. If the channel variation amount is less than the lower threshold value, the base station may determine that the channel is changing slowly. When the channel is changing slowly, the base station may allocate fewer DMRSs than before. Accordingly, the base station performs step S2517 to increase the slot group size. If the channel variation amount is greater than the lower threshold value, the base station performs step S2515.

In step S2515, the base station determines whether the channel variation amount is greater than an upper threshold value. If the channel variation amount is greater than the upper threshold value, the base station may determine that the channel is changing fast. When the channel is changing fast, the base station may allocate more DMRSs than before. Accordingly, the base station performs step S2519 to decrease the slot group size. If the channel variation amount is less than the upper threshold value, the base station may determine that the channel variation amount is between the lower threshold value and the upper threshold value. Accordingly, the base station may determine that the channel variation amount is similar to a previous level and performs step S24521 to maintain the slot group size.

In step S2523, the base station transmits the changed slot group information to the UE. The base station transmits, to the UE, a signal in which the DMRS is allocated for each group based on the changed slot group information. Thereafter, the procedure is performed again from step S2503, and the above-described procedure may be repeated.

In FIGS. 24 and 25, the base station determines the slot group size based on the channel variation amount. Unlike the above-described procedure of FIGS. 24 and 25, the UE may directly determine to change and maintain the slot group and may transmit the determination to the base station.

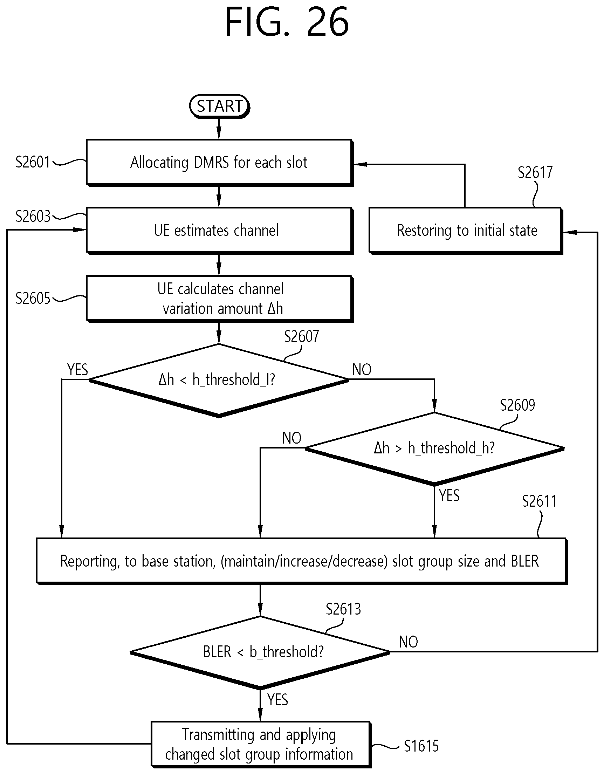

FIG. 26 shows an example of a procedure in which a base station changes a slot group configuration based on slot group size information directly determined by a UE according to an embodiment of the present disclosure.

In step S2601, the base station transmits, to the UE, a signal in which DMRSs are allocated in each slot. To this end, the base station may first transmit, to the UE, a configuration message indicating the number and positions in which DMRSs are allocated in each slot.

In step S2603, the UE performs channel estimation based on the received signal. The UE may estimate a channel gain, a channel quality, etc., based on the DMRS. The UE may determine an estimated channel value based on a channel impulse response (CIR) and a channel transfer function (CTF). In addition, the UE may measure a BLER through decoding of the received signal.

In step S2605, the UE calculates a channel variation amount Δh. The UE may compare previously measured channel information with previously received channel information, and may determine the channel variation amount. To this end, the UE should have a memory for storing a previous channel variation amount.

In step S2607, the UE determines whether the channel variation amount is less than a lower threshold value. If the channel variation amount is less than the lower threshold value, the UE may determine that a channel is changing slowly. When the channel is changing slowly, the UE may sufficiently cope with the channel change even if the UE receives a signal in which fewer DMRSs are allocated than before. Therefore, the UE determines to increase a slot group size. If the channel variation amount is greater than the lower threshold value, the UE performs step S2609.

In step S2609, the UE determines whether the channel variation amount is greater than an upper threshold value. if the channel variation amount is greater than the upper threshold value, the UE may determine that the channel is changing fast. when the channel is changing fast, the UE needs to cope with the channel change by receiving a signal in which more DMRSs are allocated than before. Therefore, the UE determines to decrease the slot group size. if the channel variation amount is less than the upper threshold value, the UE may determine that the channel variation amount is between the lower threshold value and the upper threshold value. Therefore, the UE may determine that the channel variation amount is similar to a previous level and determine to maintain the slot group size.

In step S2611, the UE transmits, to the base station, information indicating a determined change of the slot group size and information on the BLER. A method in which the UE transmits the information indicating the change of the slot group size and the information on the BLER to the base station is not limited to a specific method. Accordingly, the UE may transmit the information indicating the determined change of the slot group size together with the information on the BLER to the base station through a physical channel, a control channel, an RRC message form, etc.

In step S2613, the base station compares the received BLER with a threshold value for the BLER. If the BLER value is greater than the threshold value, step S2617 is performed, and if the BLER value is less than the threshold value, step S2615 is performed.

In step S2615, the base station transmits, to the UE, changed slot group information. The base station transmits, to the UE, a signal in which DMRSs are allocated for each group based on the changed slot group information. Thereafter, the procedure is performed again from step S2603, and the above-described procedure may be repeated.

In step S2617, the base station sets the slot group to an initial state. As described above, in a case in which the BLER value is greater than the threshold value, it may be determined that a communication quality required by an operator or a user is not satisfied, and the slot group configuration is restored to the initial state. Therefore, DMRSs may be allocated in each slot through performing step S2601.

In the present disclosure, a method in which the base station transmits information on a slot group to the UE may be implemented in various ways. As an example, as shown in [Table 3] below, the information on the slot group may include a plurality of slot group information fields, and the base station may transmit the information on the slot group to the UE through slot group field values.

**[Table 3]**

| Slot Group Information | Contents | Note |
|---|---|---|
| initialSlotGroup | {0, 1} | 0: it is not the initial slot group |
| | | 1: it is the initial slot group |
| slotGroupSize | {1, 2, 4, 8 ...} | number of slots in a single slot group |
| numDMRSPerSlotGroup | {1, 2, 3, ...} | number of DMRS symbols in a single slot group |
| startPositionWithinSlotGroup | {0, 1, 2, 3, ...} | position of the first DMRS symbol within a slot group |
| intervalWithinSlotGroup | {0, 1, 2, 3, ...} | interval between DMRS symbols within a slot group |
| channelInfoReportType | {raw, difference, decision} | channel information report type |
| channelThreshold_h | n-bit value | higher threshold of channel difference |
| channelThreshold_l | n-bit value | lower threshold of channel difference |

initialSlotGroup is a field indicating whether an initial state in which a currently transmitted slot group is not applied. slotGroupSize is a field indicating how many slots a slot group is composed of. numDMRSPerSlotGroup is a field indicating how many DMRSs are included per slot group. startPositionWithinSlotGroup is a field indicating a slot number having a first DMRS symbol within a slot group. In this case, the slot number may increase from 0. intervalWithinSlotGroup is a field indicating an interval between slots including DMRSs within a slot group. Accordingly, the UE may determine positions of slots in which DMRSs exist through numDMRSPerSlotGroup, startPositionWithinSlotGroup, and intervalWithinSlotGroup. channelInfoReportType is a field indicating which type of value related to a channel estimated by the UE is to be transmitted. For example, in a case in which a value of the channelInfoReportType field indicates raw data, the UE transmits an estimated channel value. In this case, the procedure of FIG. 24 may be performed. In a case in which the value of the channelInfoReportType field indicates difference, the UE transmits a channel variation amount to the base station. In this case, the procedure of FIG. 25 may be performed. In a case in which the value of the channelInfoReportType field indicates decision, the UE transmits information on a change of a slot group size to the base station. In this case, the procedure of FIG. 26 may be performed.

In a case in which the value of the channelInfoReportType field indicates decision, since the UE determines a type of change of a slot group size based on channel information directly measured by the UE, the UE needs to receive information on an upper threshold value and a lower threshold value together from the base station. The base station may transmit the threshold values to the UE through channelThreshold_h, channelThreshold_l.

A UE receiving information on a slot group from the base station may transmit information on a measured channel to the base station. The information on the channel may include a plurality of channel information fields as shown in [Table 4] below.

**[Table 4]**

| Channel Information | Contents | Note |
|---|---|---|
| channelInfoReportType | {raw, difference, decision} | channel information report type |
| channelInfoType | {CIR, CTF, DMRS, ...} | channel information type |
| channelInfo_raw | n-bit value | raw channel information value |
| channelInfo_diff | n-bit value | channel difference value |
| channelInfo_decision | {increment, decrement, keep} | slot group decision |

channelInfoReportType is a field indicating a type of channel information transmitted by the UE, similarly to Slot Group Information. In a case in which the channel information transmitted by the UE is of a raw type, additional information indicating which of a channel impulse response, a channel transfer function, a DMRS, etc., is used as a basis for measurement of the corresponding value may be additionally required. Accordingly, the UE may transmit, to the base station, information indicating a type of information through a channelInfoType field. In addition, in a case in which the channelInfoReportType field indicates a raw type, the UE may transmit raw type information to the base station through a channelInfo_raw field, and thus a channel value may be transmitted. In a case in which the channelInfoReportType field indicates a difference type, the UE may transmit difference type information to the base station through a channelInfo_diff field, and thus a channel variation rate may be transmitted. In addition, in a case in which the channelInfoReportType field indicates a decision type, the UE may transmit decision type information to the base station through a channelInfo_decision field, and whether to increase, decrease, or maintain a slot group size may be transmitted.

The base station and the UE may form various types of slot groups based on the above-described slot group information fields and channel information fields.

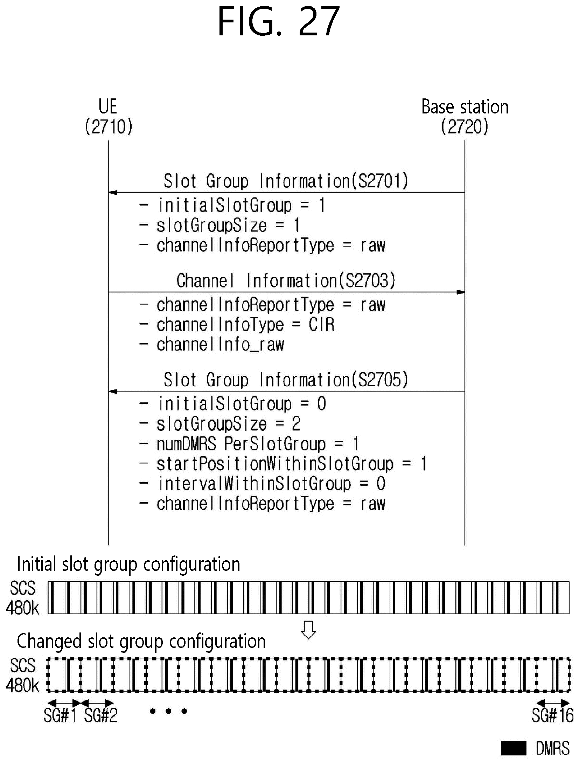

FIG. 27 shows a first embodiment of a slot group determined through signaling between a UE 2710 and a base station 2720 according to an embodiment of the present disclosure. Referring to FIG. 27, the base station 2720 may allocate DMRSs by configuring such that one slot group includes two slots.

In step S2701, the base station 2720 transmits slot group information to the UE 2710. Field values included in the slot group information may be set to initialSlotGroup = 1, slotGroupSize = 1, and channelInfoReportType = raw. Accordingly, the base station 2720 may transmit, to the UE 2710, an initial slot configuration configured such that the UE 2710 transmits a channel measurement value. In addition, the UE 2710 may be configured to report an estimated channel value to the base station 2720 based on DMRSs allocated according to the initial configuration value.

In step S2703, the UE 2710 transmits channel information to the base station 2720. Field values included in the channel information may be set to channelInfoReportType = raw and channelInfoType = CIR, and channelInfo_raw may include a channel value measured by the UE 2710 based on a channel impulse response.

In step S2705, the base station 2720 transmits slot group information to the UE 2710. The base station 2720 determines new slot group information by comparing channel changes based on channel information received from the UE 2710. The slot group information may include field values related to a slot group configuration. As an example, as shown in FIG. 27, the base station may determine a slot group configuration in which a size of a slot group is 2, one DMRS is included per slot group, and a DMRS is allocated in slot number 1 within the slot group. In this case, since a slot number starts from 0, slot number 1 indicates a second slot. Accordingly, field values included in the slot group information may be set to initialSlotGroup = 0, slotGroupSize = 2, numDMRSPerSlotGroup = 1, startPositionWithinSlotGroup = 1, intervalWithinSlotGroup = 0, and channelInfoReportType = raw. In this case, in a case in which one DMRS is allocated within a slot group, the intervalWithinSlotGroup field may be omitted. The base station 2720 may transmit data based on a changed slot group configuration different from an initial configuration as shown in FIG. 27.

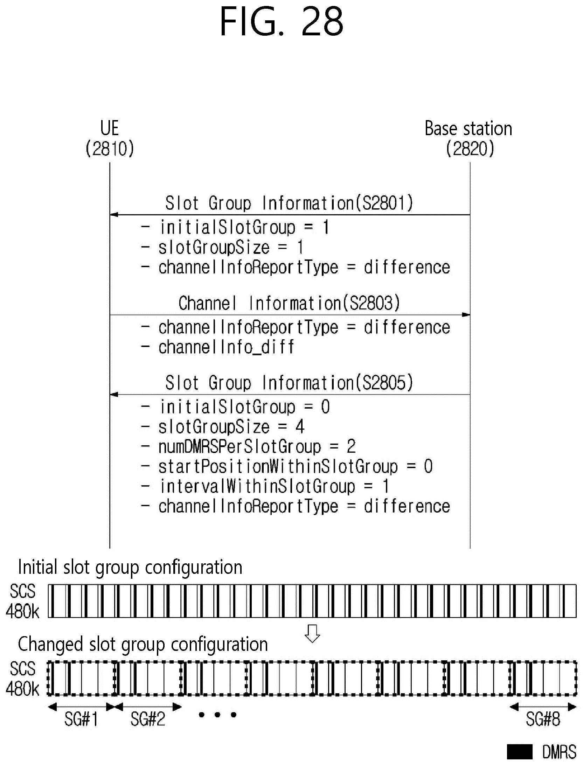

FIG. 28 shows a second embodiment of a slot group determined through signaling between a UE 2810 and a base station 2820 according to an embodiment of the present disclosure. Referring to FIG. 28, the base station 2820 may allocate DMRSs by configuring such that one slot group includes four slots.

In step S2801, the base station 2820 transmits slot group information to the UE 2810. Field values included in the slot group information may be set to initialSlotGroup = 1, slotGroupSize = 1, and channelInfoReportType = difference. Accordingly, the base station 2820 may transmit, to the UE 2810, an initial slot configuration configured such that the UE 2810 transmits a channel variation amount.

In step S2803, the UE 2810 transmits channel information to the base station 2820. Field values included in the channel information may be set to channelInfoReportType = difference, and channelInfo_diff may include a channel variation amount value measured by the UE 2810.

In step S2805, the base station 2820 transmits slot group information to the UE 2810. The base station 2820 determines new slot group information based on a channel variation amount received from the UE 2810. The slot group information may include field values related to a slot group configuration. As an example, as shown in FIG. 28, the base station may determine a slot group configuration in which a size of a slot group is 4, two DMRSs are included per slot group, a DMRS is first allocated in slot number 0 within the slot group, and DMRSs within the corresponding group are allocated at an interval of one slot. Accordingly, field values included in the slot group information may be set to initialSlotGroup = 0, slotGroupSize = 4, numDMRSPerSlotGroup = 2, startPositionWithinSlotGroup = 0, intervalWithinSlotGroup = 1, and channelInfoReportType = difference. Through the above-described procedure, the base station 2820 may transmit data based on a changed slot group configuration different from an initial configuration as shown in FIG. 28.

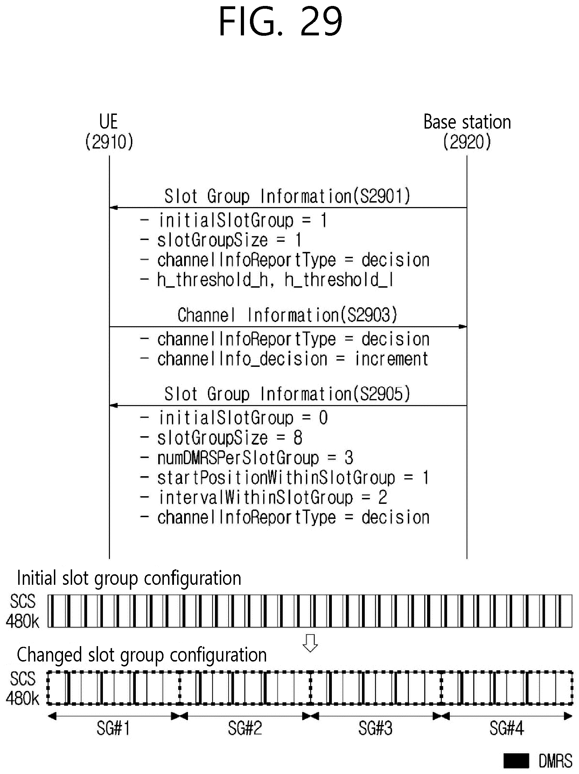

FIG. 29 shows a third embodiment of a slot group determined through signaling between a UE 2910 and a base station 2920 according to an embodiment of the present disclosure. Referring to FIG. 29, the base station 2920 may allocate DMRSs by configuring such that one slot group includes eight slots.

In step S2901, the base station 2920 transmits slot group information to the UE 2910. Field values included in the slot group information may be set to initialSlotGroup = 1, slotGroupSize = 1, and channelInfoReportType = decision. Since the UE is configured to determine a slot group size, the base station 2920 may transmit, to the UE 2910, an upper threshold value of a channel change through an h_threshold_h field and a lower threshold value of the channel change through an h_threshold_l field.

Therefore, the base station 2920 may transmit, to the UE 2910, an initial slot configuration configured such that the UE 2910 determines a configuration of the slot group size and reports information on increase, maintenance, and decrease of the slot group size to the base station 2910.

In step S2903, the UE 2910 transmits channel information to the base station 2920. The UE 2910 may determine to increase the slot group size through comparison of h_threshold_h, h_threshold_l, and a channel variation amount. Accordingly, field values included in the channel information may be set to channelInfoReportType = decision, and a channelInfo_decision value may be determined as a field value indicating increase of the slot group size determined by the UE 2910.

In step S2905, the base station 2920 transmits slot group information to the UE 2910. The base station 2920 determines new slot group information based on a field value indicating increase of the slot group size received from the UE 2910. The slot group information may include field values related to a slot group configuration. As an example, as shown in FIG. 29, the base station may determine a slot group configuration in which a size of a slot group is 8, three DMRSs are included per slot group, a DMRS is first allocated in slot number 1 within the slot group, and DMRSs within the corresponding group are allocated at an interval of two slots. Accordingly, field values included in the slot group information may be set to initialSlotGroup = 0, slotGroupSize = 8, numDMRSPerSlotGroup = 3, startPositionWithinSlotGroup = 1, intervalWithinSlotGroup = 2, and channelInfoReportType = decision. Through the above-described procedure, the base station 2920 may transmit data based on a changed slot group configuration different from an initial configuration as shown in FIG. 29.

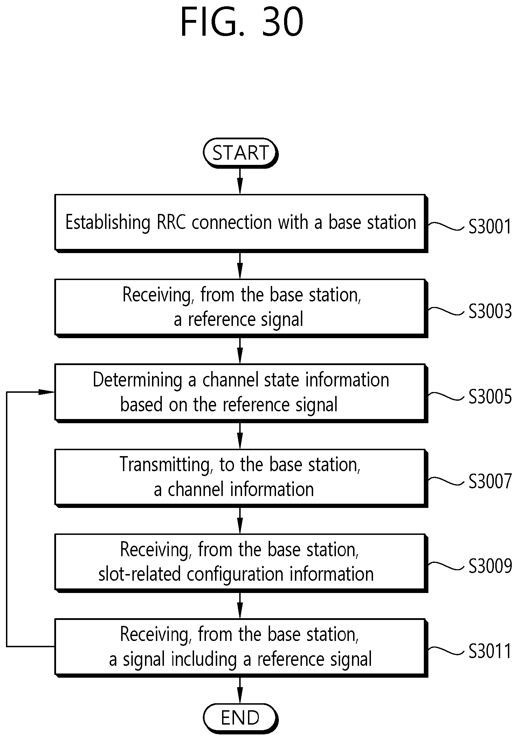

FIG. 30 shows an example of a procedure in which a UE transmits and receives data based on a slot group configuration according to an embodiment of the present disclosure.

In step S3001, the UE performs an RRC connection establishment procedure with a base station. The UE may perform an initial access with the base station for RRC connection establishment. The UE may receive an initial configuration from the base station through an RRC configuration message. In addition, the UE may receive information on an initial slot group for configuring a slot group to an initial state. The UE may receive the information on the initial slot group through at least one of a physical channel, a control channel, or an RRC message form. The information on the initial slot group may be transmitted in various forms. For example, the information on the initial slot group may be transmitted in the form of a slot group information message as described above in [Table 3].

The slot group information message may configure a slot group and may include allocation information of DMRSs for each slot group. In addition, it may include a channel information report type and information on a threshold value required for the UE to transmit channel information to the base station.

For example, the slot group information message may include at least one of a field indicating whether a currently transmitted slot group corresponds to an initial state in which a slot group is not applied, a field indicating how many slots constitute a slot group, a field indicating how many DMRSs are included per slot group, a field indicating a slot number having a first DMRS symbol within the slot group, a field indicating an interval between slots including DMRSs within the slot group, a field indicating a channel information report type, a field indicating an upper threshold value of a channel change, and a field indicating a lower threshold value of the channel change.

The initial slot group configuration may be variously configured by an operator. For example, the base station may configure an initial slot group in which one slot group consists of a single slot such that a DMRS is allocated in every slot regardless of a change in a channel environment. Accordingly, the initial slot group may be configured identically to a case in which a slot group is not configured.

In step S3003, the UE receives a reference signal from the base station. The UE may receive data, etc., together with the reference signal. The UE may determine a slot to which the reference signal is allocated based on the initial slot group configuration.

In step S3005, the UE determines channel information based on the reference signal. The channel information may include at least one of a measured channel value, a channel variation amount, or a decision on increase or decrease of a slot group.

The UE may estimate a channel gain, channel quality, etc., based on the reference signal. The UE may determine a channel measurement value using a channel impulse response, a channel transfer function, DMRSs, etc. In addition, the UE may measure a BLER through decoding of a received signal.

The channel information to be transmitted by the UE to the base station may be determined according to the initial slot group configuration. For example, when the base station requests a channel variation amount as in the procedure of FIG. 25, the UE may calculate the channel variation amount to report to the base station. As another example, when the base station requests a decision on a slot group size as in the procedure of FIG. 26, the UE may determine whether to increase, decrease, or maintain the slot group size based on the channel variation amount. The UE may perform the decision on increase or decrease of the slot group size based on an upper threshold value and a lower threshold value as in the procedure of FIG. 22.

In step S3007, the UE transmits channel information to the base station. The channel information may include at least one of the decision on increase or decrease of the slot group, the channel variation amount, or the channel value measured in step S3005. In addition, the UE may transmit a BLER together with the channel information to the base station. The channel information may include, as shown in [Table 4], a field indicating a type of channel information transmitted by the UE, a field indicating a channel information measurement type, and a field indicating a channel information value.

In step S3009, the UE receives slot-related configuration information from the base station. The base station determines the slot-related configuration information based on the channel information received from the UE and transmits the slot-related configuration information to the UE.

The base station may first determine whether to initialize a slot group based on the BLER received from the UE. If the BLER is equal to or greater than a threshold value, the base station may initialize the slot group configuration. When the slot group configuration is initialized, the base station may transmit initial slot configuration information to the UE. Accordingly, the configuration may be identical to a case in which a slot group is not configured.

If the BLER is less than the threshold value, the base station determines whether to increase, decrease, or maintain the slot group size. The base station may determine the slot group size by performing the procedure as in FIG. 22. That is, the base station may determine the slot group size based on the channel variation amount, an upper threshold value of the channel variation amount, and a lower threshold value of the channel variation amount. For this purpose, the base station may directly receive the channel variation amount from the UE or determine the channel variation amount based on a channel value transmitted by the UE. In addition, when the UE transmits a decision on increase or decrease of the slot group as described above, the base station may determine the slot group size based on the received decision. The slot-related configuration information may be transmitted in the form of a slot group information message as described above in [Table 3] and step S3001.

In step S3011, the UE receives a signal including a reference signal from the base station. Since the UE can identify a slot to which the reference signal is allocated based on the slot-related configuration information received in step S3009, the UE may smoothly receive data from the base station. Thereafter, the UE may again perform the procedure from step S3005. Accordingly, the slot group configuration may be dynamically changed.

A periodicity at which the UE transmits channel information may be variously implemented. For example, the UE may be configured to transmit channel information at a specific periodicity. As another example, when the UE measures a channel variation amount, the UE may be configured to transmit channel information when the channel variation amount is greater than a preset threshold value.

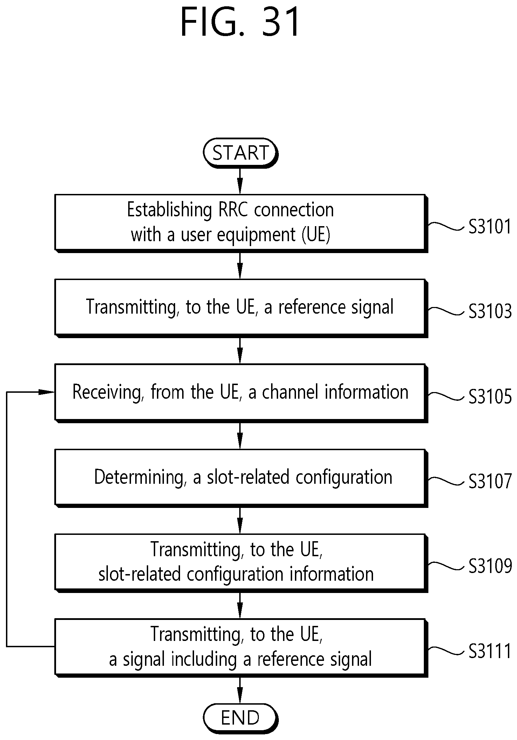

FIG. 31 shows an example of a procedure in which a base station transmits and receives data based on a slot group configuration according to an embodiment of the present disclosure.

In step S3101, the base station performs an RRC connection establishment procedure with a UE. The base station may perform an initial access with the UE for RRC connection establishment. The base station may transmit an initial configuration to the UE through an RRC configuration message. In addition, the base station may transmit, to the UE, information on an initial slot group for configuring a slot group to an initial state. The information on the initial slot group may be transmitted through at least one of a physical channel, a control channel, or an RRC message form. The information on the initial slot group may be transmitted in various forms. For example, the information on the initial slot group may be transmitted in the form of a slot group information message as described above in [Table 3] and step S3001. Accordingly, the base station may indicate information on a slot group, a type of channel information to be reported by the UE, etc. In addition, when the UE determines a slot group size, the base station may transmit, to the UE, an upper threshold value and a lower threshold value required for such determination through the slot group information message.

The initial slot group configuration may be variously configured by an operator. For example, the base station may configure an initial slot group in which one slot group consists of a single slot such that a DMRS is allocated in every slot without considering a change in a channel environment. Accordingly, the initial slot group may be configured identically to a case in which a slot group is not configured.

In step S3103, the base station transmits a reference signal to the UE. The base station may transmit, to the UE, slots to which the reference signal is allocated based on the initial slot group.

In step S3105, the base station receives channel information from the UE. The channel information may include at least one of a measured channel value, a channel variation amount, or a decision on increase or decrease of a slot group. A type of channel information to be transmitted by the UE may be determined based on the slot group information transmitted in step S3101. In addition, the base station may receive a BLER together with the channel information from the UE. The channel information may include, as shown in [Table 4], a field indicating a type of channel information transmitted by the UE, a field indicating a channel information measurement type, and a field indicating a channel information value.

In step S3107, the base station determines a slot-related configuration. The base station may first determine whether to initialize a slot group based on the BLER received from the UE. If the BLER is equal to or greater than a threshold value, the base station may initialize the slot group configuration. When the slot group configuration is initialized, the base station may transmit initial slot configuration information to the UE. Accordingly, the configuration may be identical to a case in which a slot group is not configured.

If the UE transmits a measured channel value, the base station may calculate a channel variation amount based on the measured channel value. If the UE directly calculates and transmits the channel variation amount, the base station may use the received channel variation amount. The base station may determine a slot group size based on the determined channel variation amount and upper and lower threshold values as described in FIG. 22.

When the UE transmits a decision on increase or decrease of a slot group, the base station may determine the slot group size based on the received decision.

In step S3109, the base station transmits the determined slot-related configuration information to the UE. The slot-related configuration information may be transmitted in the form of a slot group information message as described above in [Table 3] and step S3101.

In step S3111, the base station transmits a signal including a reference signal to the UE. Since the UE can identify slots to which the reference signal is allocated based on the slot-related configuration information received in step S3009, the UE may smoothly receive data from the base station. Thereafter, the base station may again perform the procedure from step S3105. Accordingly, the slot group configuration may be dynamically changed.

Although the above-described procedure has been described based on DMRS among reference signals, the present disclosure is not limited thereto, and other types of reference signals may also be used in the same manner. That is, the reference signal is not limited to a specific name and may be applied to all reference signals that are repeatedly allocated.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

### INDUSTRIAL AVAILABILITY

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

## Claims

1. A method of operating a user equipment (UE) in a wireless communication system, the method comprising:
performing a radio resource control (RRC) connection establishment procedure with a base station;
receiving, from the base station, a reference signal and data;
determining channel information based on the reference signal;
transmitting, to the base station, the channel information; and
receiving, from the base station, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.

2. The method of claim 1,
wherein the reference signal is a demodulation reference signal (DMRS).

3. The method of claim 1,
wherein, in a case in which the channel variation amount is greater than an upper threshold, a size of the slot group is decreased,
wherein, in a case in which the channel variation amount is less than a lower threshold, the size of the slot group is increased, and
wherein, in a case in which the channel variation amount is between the upper threshold and the lower threshold, the size of the slot group is maintained.

4. The method of claim 1,
wherein the information related to the slot group includes at least one of a size of the slot group, a number of reference signals within the slot group, a position of the reference signal within the slot group, and an interval of reference signals within the slot group.

5. The method of claim 1, further comprising:
receiving initial slot-related configuration information,
wherein the initial slot-related configuration information indicates that a size of the slot group consists of a single slot.

6. The method of claim 5, further comprising:
determining a block error rate (BLER) based on the data; and
transmitting, to the base station, the BLER,
wherein, in a case in which the BLER is greater than a threshold, the slot-related configuration information is determined to be the initial slot-related configuration information.

7. The method of claim 5,
wherein the initial slot-related configuration information includes a value indicating a type of the channel information to be reported by the UE to the base station, and
wherein the type of the channel information is one of a channel value, a channel variation amount, or a decision on increase or decrease of the slot group.

8. The method of claim 1,
wherein, in a case in which the UE reports a channel value to the base station, the channel information including the channel value measured based on the reference signal is transmitted to the base station, and
wherein, in a case in which the base station receives the channel information including the channel value, the channel variation amount is determined by the base station based on the channel value measured by the UE.

9. The method of claim 8,
wherein the measured channel value is measured based on one of a channel impulse response, a channel transfer function, or a DMRS.

10. The method of claim 1,
wherein, in a case in which the UE reports a channel variation amount to the base station, the method further comprises:
determining a channel value based on the reference signal; and
determining the channel variation amount based on the channel value,
wherein the channel information including the channel variation amount is transmitted to the base station, and
wherein the information related to the slot group is determined by the base station based on the channel variation amount.

11. The method of claim 10,
wherein the channel information is configured to be reported by the UE in a case in which the channel variation amount is greater than a predetermined threshold.

12. The method of claim 1,
wherein, in a case in which the UE reports a decision on increase or decrease of the slot group to the base station, the method further comprises:
determining a channel value based on the reference signal;
determining a channel variation amount based on the channel value; and
determining the increase or decrease of the slot group based on the channel variation amount,
wherein the decision on increase or decrease of the slot group is one of increase, decrease, or maintenance,
wherein the channel information including the decision on increase or decrease of the slot group is transmitted to the base station, and
wherein the information related to the slot group is determined by the base station based on the decision on increase or decrease of the slot group.

13. The method of claim 1,
wherein the channel information is transmitted through at least one of a physical channel, a control channel, or an RRC message.

14. A method of operating a base station in a wireless communication system, the method comprising:
performing a radio resource control (RRC) connection establishment procedure with a user equipment (UE);
transmitting, to the UE, a signal including a reference signal and data;
receiving, from the UE, channel information; and
transmitting, to the UE, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.

15. The method of claim 14,
wherein, in a case in which the channel variation amount is greater than an upper threshold, a size of the slot group is decreased,
wherein, in a case in which the channel variation amount is less than a lower threshold, the size of the slot group is increased, and
wherein, in a case in which the channel variation amount is between the upper threshold and the lower threshold, the size of the slot group is maintained.

16. A user equipment (UE) in a wireless communication system, comprising:
a transceiver; and
a processor connected to the transceiver,
wherein the processor is configured to:
perform a radio resource control (RRC) connection establishment procedure with a base station;
receive, from the base station, a reference signal and data;
determine channel information based on the reference signal;
transmit, to the base station, the channel information; and
receive, from the base station, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.

17. A base station in a wireless communication system, comprising:
a transceiver; and
a processor connected to the transceiver,
wherein the processor is configured to:
perform a radio resource control (RRC) connection establishment procedure with a user equipment (UE);
transmit, to the UE, a signal including a reference signal and data;
receive, from the UE, channel information; and
transmit, to the UE, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.

18. A communication device, comprising:
at least one processor; and
at least one computer memory connected to the at least one processor and storing instructions that, based on being executed by the at least one processor, cause the communication device to perform operation comprising:
performing a radio resource control (RRC) connection establishment procedure with a base station;
receiving, from the base station, a reference signal and data;
determining channel information based on the reference signal;
transmitting, to the base station, the channel information; and
receiving, from the base station, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.

19. A non-transitory computer-readable medium storing at least one instruction executable by a processor,
wherein the at least one instruction, when executed by the processor, causes a device to perform operation comprising:
performing a radio resource control (RRC) connection establishment procedure with a base station;
receiving, from the base station, a reference signal and data;
determining channel information based on the reference signal;
transmitting, to the base station, the channel information; and
receiving, from the base station, slot-related configuration information determined based on the channel information,
wherein the slot-related configuration information includes information related to a slot group determined based on a channel variation amount, and
wherein a periodicity and a position of the reference signal are configured for respective ones of the slot group based on the information related to the slot group.
